# EUROPEAN PATENT APPLICATION

(11) **EP 1 607 203 A1**
(43) Date of publication of application: **21.12.2005**
(21) Application number: 04722999.2
(22) Date of filing: 24.03.2004
(51) Int. Cl.: B29C 45/14, B29C 45/26

(54) **METHOD FOR PRODUCING INJECTION-MOLDED AND IN-MOLD DECORATED ARTICLE AND MOLD FOR INJECTION MOLDING WITH IN-MOLD DECORATION**

(30) Priority: 25.03.2003 JP 2003083164; 12.05.2003 JP 2003133130
(71) Applicant: NISSHA PRINTING CO., LTD., Nakagyo-ku Kyoto-shi Kyoto 604-8551 (JP)
(72) Inventor: FURUKAWA, Eiji; c/o NISSHA PRINTING CO., LTD. 3,, Kyoto-shi, Kyoto 6048551 (JP); TOYOOKA, Naoto; c/o NISSHA PRINTING CO., LTD., Kyoto-shi, Kyoto 6048551 (JP)
(74) Representative: HOFFMANN EITLE
(86) International application number: PCT/JP2004/004029
(87) International publication number: WO 2004/085130

(57) **Abstract**

In a manufacturing method for injection-molded and in-mold decorated articles including injection of molding resin (4) into a molding space (3) defined by a decorating film (5) and a mold (1), the molding space has a product molding space (31) and a resin-discharging-use molding space (33) which is formed around the product molding space and into which the molding resin is let to flow for discharge of the molding resin from the product molding space. The molding resin is injected into the product molding space, and while part of the injected molding resin is discharged from the product molding space into the resin-discharging-use molding space, the molding resin is filled into the product molding space.

## Description

### TECHNICAL FIELD

The present invention relates to a manufacturing method for injection-molded and in-mold decorated articles, the method including, with a decorating film set between a first mold element and a second mold element placed in opposition to each other, injecting molten molding resin into a molding space defined by the decorating film and the first mold element, and solidifying the molding resin filled in the molding space by the injection while decorating a surface of the molding resin with the decorating film. The invention also relates to a mold for injection-molding with in-mold decoration for use in this manufacturing method.

### BACKGROUND ART

In recent years, from the demand for being light, thin, short and small, molded articles of electronic equipment or various types of components have been under an increasing desire for the most possible reduction in their thicknesses. In order to meet this desire, there has been provided a resin molded article manufacturing method described in Japanese examined patent publication No. 3044027, for example, as a resin molded article manufacturing method using an injection mold which is composed of a molding space matching external shapes of various products and an auxiliary space surrounding the entire periphery of the molding space.

It is described in the publication that this molded article manufacturing method of the prior art is an invention for obtaining a resin molded article by injecting molten molding resin from a gate portion into the auxiliary space that surrounds the entire periphery of the molding space, which is a space defined by mutually oppositely placed two molds, and thereafter injecting molding resin into the molding space via the auxiliary space. In this case, it is also described that since the resin can be made to flow into the molding space in all directions of the auxiliary space, it is easily achievable to obtain a uniform resin inflow even with a thin molding space.

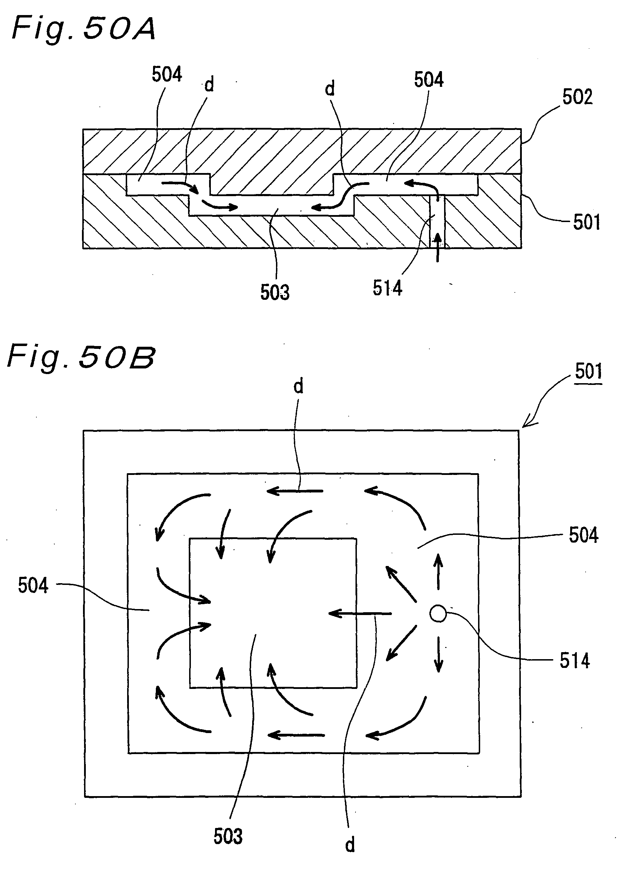

Now the prior-art manufacturing method is explained with reference to Figs. 50A and 50B, where Fig. 50A is a schematic sectional view of the molds in a state that those spaces are formed by the two molds, and Fig. 50B is a schematic plan view showing flows of the molding resin during the injection of molten molding resin into the individual spaces of Fig. 50A.

As shown in Fig. 50A, the two molds, i.e., a first mold element 501 and a second mold element 502 are placed in opposition to each other and clamped together, by which a molding space 503 and an auxiliary space 504 communicatively positioned over the entire outer periphery of the molding space 503 is formed between inner surfaces of the molds 501 and 502. The auxiliary space 504 is provided with a gate portion 514 that allows molten molding resin to be injected thereinto from external of the mold 501.

In this state shown above, as molten molding resin is injected from the gate portion 514 into the auxiliary space 504, the molding resin injected into the auxiliary space 504 is, as shown in Fig. 50B, let to flow so as to go around the entire outer periphery of the molding space 503 and then flow toward generally central portion of the molding space 503 (arrows 'd' in the figure show the directions of flow of the molding resin), by which the molding resin is introduced from the auxiliary space 504 to the molding space 503. That is, the molding resin injected into the auxiliary space 504 through the gate portion 514 is introduced into the molding space 503 in every direction that runs from the auxiliary space 504 toward the molding space 503. As a result of the introduction of the molding resin into the molding space 503 in every direction as shown above, the molding resin can be supplied in a generally uniform state into the thin molding space 503.

Then, after the introduced molding resin is solidified, the first mold element 501 and the second mold element 502 are separated away from each other and a thin resin molded article 505 is taken out. Further thereafter, decoration of the surface of the resin molded article 505 is performed by, for example, printing or coating, by which an injection-molded and then decorated article is manufactured.

However, in such a prior-art resin molded article manufacturing method as shown above, since the decoration of the resin molded article is performed after the formation of the resin molded article, that is, since the decoration is performed as an after processing, there are problems that multilayer decoration would entail a poor production efficiency and moreover that a cubic configuration, if the molded article has, would make it hard to do an easy printing, or a precision-demanding pattern would make it impossible to do coating.

Further, since the molten molding resin injected from the gate portion 514 into the auxiliary space 504 is injected into the molding space 503 via the auxiliary space 504, that is, since the molten molding resin flows in from the auxiliary space 504, which is positioned so as to surround the entire outer periphery of the molding space 503, toward the molding space 503, there is a problem as shown below.

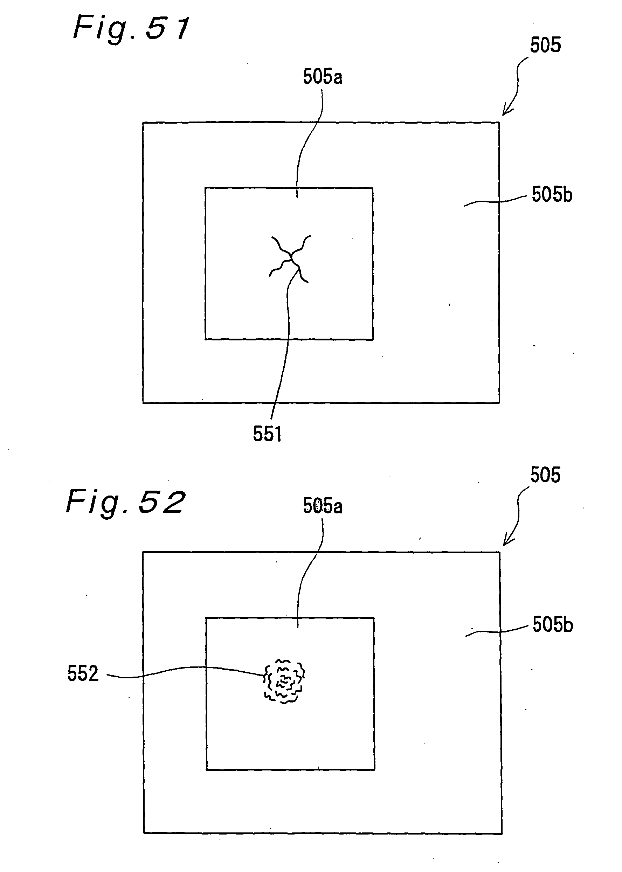

That is, fore end portions of the molten molding resin containing a large amount of gases are concentrated at a center portion of the molding space 503, and as a result, gases are highly likely to remain at the center portion of the formed resin molded article 505. Furthermore, in the state that gases are likely to remain as shown above, the molten molding resin collides with itself at places near the central portion of the molding space 503, causing a fear that a resin burn 552 due to the gases may occur near the central portion of a resin molded portion 505a formed by the molding space 503 (in addition, numeral 505b in the figure denotes a resin molded portion formed by the auxiliary space 504) as shown in Fig. 52, which is a schematic view of the resin molded article 505. Moreover, as shown in Fig. 51, because of the collisions of the molten molding resin in vicinities of the central portion of the molding space 503, a weld 551 is more likely to occur in vicinities of the generally central portion of the resin molded portion 505a formed by the molding space 503, as another problem.

Also, since the molten molding resin is injected into the molding space 503 via the auxiliary space 504 that surrounds the entire outer periphery of the molding space 503 to fulfill the injection of generally uniform molding resin injection into the molding space 503 in every direction, there is a restriction that the filling of molding resin into the auxiliary space 504, which is positioned on one side opposite to the gate portion 514 with the molding space 503 interposed therebetween, need to be done before the start of the filling of the molding resin into the molding space 503. The presence of such a restriction causes a problem that the configuration and placement of the molding space 503 and the auxiliary space 504 is substantially under quite rigid limitations.

### DISCLOSURE OF THE INVENTION

Accordingly, an object of the present invention is to provide, for solving the above-described issues, a manufacturing method for injection-molded and in-mold decorated article, the method being capable of achieving the decoration of molded articles of various configurations with high precision and high efficiency, as well as of preventing occurrence of welds or the like in central portion or the like of the resin molded article to be molded, for the process of in-mold decoration simultaneous with injection molding including, setting a decorating film between a first mold element and a second mold element placed in opposition to each other, injecting molten molding resin into a molding space defined by the decorating film and the first mold element, and solidifying the molding resin filled in the molding space by the injection while decorating a surface of the molding resin with the decorating film, and also to provide a mold for injection-molding with in-mold decoration to be used in the above-described manufacturing.

In order to achieve the above object, the present invention has the following constitutions.

According to a first aspect of the present invention, there is provided a manufacturing method for an injection-molded and in-mold decorated article, the method including, setting a decorating film between a first mold element and a second mold element placed in opposition to each other, injecting molten molding resin into a molding space defined by the decorating film and the first mold element, and solidifying the molding resin filled in the molding space, thereby manufacturing the injection-molded and in-mold decorated article, wherein
the molding space includes:
a product molding space, and
a resin-discharging-use molding space which is formed so as to be adjacent to and communicative with at least part of a periphery of the product molding space and into which the molding resin is let to flow for discharge of the molding resin from the product molding space,
the method comprising:
injecting the molding resin into the product molding space;
discharging part of the injected molding resin from the product molding space into the resin-discharging-use molding space;
completing filling of the molding resin into the product molding space and the resin-discharging-use molding space; and
solidifying the molding resin while decorating a surface of the molding resin with the decorating film, so that the injection-molded and in-mold decorated article is manufactured.

According to a second aspect of the present invention, there is provided the manufacturing method for the injection-molded and in-mold decorated article as defined in the first aspect, wherein
the molding space includes a resin-injection-use molding space which is formed so as to be adjacent to and communicative with at least part of a periphery of the product molding space and into which the molding resin is injected from outside of the molding space,
the method further comprising:
injecting the molding resin from outside of the molding space into the resin-injection-use molding space; and
making the injected molding resin flow from the resin-injection-use molding space into the product molding space, by which injection of the molding resin into the product molding space is fulfilled.

According to a third aspect of the present invention, there is provided the manufacturing method for the injection-molded and in-mold decorated article as defined in the first aspect, wherein
the molding space includes:
a first said product molding space and a second said product molding space, which are communicative with each other, and
a common said resin-discharging-use molding space which is placed between the first product molding space and the second product molding space and which is communicative with the first product molding space and the second product molding space,
the method further comprising:
injecting the molding resin into the first product molding space and the second product molding space;
discharging, into the common resin-discharging-use molding space, part of the molding resin injected into the first product molding space and part of the molding resin injected into the second product molding space; and
completing filling of the molding resin into the first product molding space, the second product molding space and the common resin-discharging-use molding space.

According to a fourth aspect of the present invention, there is provided the manufacturing method for the injection-molded and in-mold decorated article as defined in the second aspect, wherein
the molding space includes:
a first said product molding space and a second said product molding space, which are communicative with each other, and
a common said resin-injection-use molding space,
the method further comprising:
injecting the molding resin from outside of the molding space into the common resin-injection-use molding space;
making the injected molding resin flow from the resin-injection-use molding space into the first product molding space and the second product molding space, by which filling of the molding resin is fulfilled.

According to a fifth aspect of the present invention, there is provided the manufacturing method for the injection-molded and in-mold decorated article as defined in the first aspect, wherein injection of the molding resin is performed in a state that, with the decorating film placed between the first mold element and the second mold element, the first mold element and the second mold element are clamped to make the molding space hermetically closed.

According to a sixth aspect of the present invention, there is provided the manufacturing method for the injection-molded and in-mold decorated article as defined in the fifth aspect, wherein, after the filling of the molding resin into the molding space, a capacity of the molding space is reduced while compressing the filled molding resin.

According to a seventh aspect of the present invention, there is provided the manufacturing method for the injection-molded and in-mold decorated article as defined in the first aspect, wherein, with the decorating film is placed between the first mold element and the second mold element and making the first mold element and the second mold element approached by each other so as to be in a condition the molding space is opened, injection of the molding resin is performed, and thereafter the first mold element and the second mold element is clamped so that a capacity of the molding space is reduced while compressing the filled molding resin.

According to an eighth aspect of the present invention, there is provided a mold for injection-molding with in-mold decoration for manufacturing an injection-molded and in-mold decorated article, by setting a decorating film placed between a first mold element and a second mold element placed in opposition to each other, injecting molten molding resin into a molding space defined by the decorating film and the first mold element, and solidifying the molding resin filled in the molding space while decorating a surface of the molding resin with the decorating film, wherein
the molding space comprises:
a product molding space into which the molten molding resin is injected; and
a resin-discharging-use molding space which is formed so as to be adjacent to and communicative with at least part of a periphery of the product molding space and into which part of the molding resin injected into the product molding space is let to flow and discharged from the product molding space.

According to a ninth aspect of the present invention, there is provided the mold for injection-molding with in-mold decoration as defined in the eighth aspect, wherein the molding space further comprises a resin-injection-use molding space which is formed so as to be communicative with at least part of the product molding space and into which the molding resin is injected from outside of the molding space, and moreover which lets the injected molding resin flow into the product molding space so that injection of the molding resin into the product molding space is fulfilled.

According to a tenth aspect of the present invention, there is provided the mold for injection-molding with in-mold decoration as defined in the eighth aspect, further comprising a film holding portion which is formed as generally protruded portion on a surface of the second mold element, with which the decorating film in the resin-discharging-use molding space is to be brought into contact by the injection of the molding resin into the resin-discharging-use molding space, and which serves to hold placement of the decorating film while removing looseness of the decorating film by putting the decorating film into close contact with a surface of the protruded portion.

According to an eleventh aspect of the present invention, there is provided the mold for injection-molding with in-mold decoration as defined in the tenth aspect, further comprising a plurality of suction portions which are set at the film holding portion or its vicinities in the surface of the second mold element and which serve for sucking and holding the decorating film in contact therewith.

According to a twelfth aspect of the present invention, there is provided the mold for injection-molding with in-mold decoration as defined in the eighth aspect, further comprising:
a recess portion formed along an entirety or part of an outer periphery of the molding space in either one of the first mold element or the second mold element; and
a protruded engagement portion which is formed on the other of the first mold element or the second mold element so as to correspond to the placement of the recessed portion and engage with the recess portion in the clamping state of the first mold element and the second mold element, wherein
in the clamping state of the first mold element and the second mold element with the decorating film interposed therebetween, tension is imparted to the decorating film by making the recessed portion and the engagement portion engaged with each other via the decorating film.

According to a thirteenth aspect of the present invention, there is provided the mold for injection-molding with in-mold decoration as defined in the eighth aspect, further comprising an air vent portion for discharging gas present in the resin-discharging-use molding space to outside' of the molding space in a vicinity of a boundary with the product molding space in the resin-discharging-use molding space.

According to a fourteenth aspect of the present invention, there is provided the mold for injection-molding with in-mold decoration as defined in the eighth aspect, wherein
the molding space comprises:
a first said product molding space;
a second said product molding space which is communicative with the first product molding space; and
a common said resin-discharging-use molding space into which part of the molding resin injected into the first product molding space and part of the molding resin injected into the second product molding space are discharged and let to flow.

According to a fifteenth aspect of the present invention, there is provided the mold for injection-molding with in-mold decoration as defined in the ninth aspect, wherein
the molding space comprises:
a first said product molding space;
a second said product molding space which is communicative with the first product molding space; and
a common said resin-injection-use molding space into which the molding resin is injected from outside of' the molding space and which lets the injected molding resin injected into the first product molding space and the second product molding space so that filling of the molding resin is fulfilled.

According to the first aspect of the present invention, in the manufacturing method for injection-molded and in-mold decorated articles, the molding space comprises a product molding space, and a resin-discharging-use molding space into which the molding resin injected into the product molding space is let to flow, in which the molding resin is injected into the product molding space, and moreover while part of the injected molding resin is discharged from the product molding space into the resin-discharging-use molding space, the molding resin is filled into the product molding space. As a result of this, in the product molding space, flows of the molding resin directed from the position of the injection of the molding resin for the discharge toward the resin-discharging-use molding space can be formed. Therefore, in the product molding space where a molded article as a product part is formed, not that the molding resin flows in every direction but that flow directions of the molding resin can be restricted so that collisions of the molding resin itself will not occur. Thus, occurrence of welds can reliably be prevented in the product molding space.

Also, part of the molding resin filled into the product molding space is let to flow into the resin-discharging-use molding space. Therefore, even if such a weld occurs, the weld occurs within the product molding space that is not used as a product part but is a removal portion, causing no problems.

Further, gases contained in the molding resin are also let to flow into the resin-discharging-use molding space along the restricted flow direction, being accumulated there together with the molding resin. Thus, no gas stagnated portion is formed in the product molding space, so that resin burns due to gas can be prevented.

Accordingly, there occur no welds or resin burns on the surface of the molded article formed by the product molding space, which becomes a final product part, thus allowing the product quality to be improved.

Also, since welds and resin burns can be prevented, decoration with the decorating film can be carried out on the surface of the molded article formed in the product molding space along with the molding process. Thus, efficient decoration can be fulfilled.

Further, since such injection-molding with in-mold decoration using a decorating film can be fulfilled, almost no effects are produced on the productivity even if the decoration is of multiple colors. Besides, since the decorating film is formed in compliance with a mold configuration, decoration can be applied even to three-dimensional configuration surfaces, to which the decoration could not be applied with normal printing. Thus, high precision decoration can be efficiently achieved.

According to the second aspect of the invention, the molding space further includes a resin-injection-use molding space into which the molding resin is injected from outside of the molding space. As a result of this, while the molding resin is injected from outside of the molding space into the resin-injection-use molding space, the injected molding resin can be made to flow from the resin-injection-use molding space into the product molding space, by which the injection of the molding resin into the product molding space can be carried out. Thus, an injection hole portion through which the molding resin is injected is not provided directly in the product molding space but provided in the resin-injection-use molding space, which is another space. As a result of this, damage of the decorating film due to jet pressure of the molding resin injected through the injection hole portion or the like can be prevented, and besides more uniformized injection of the molding resin into the product molding space can be achieved.

According to the third and fourth aspects of the present invention, even in cases where the molding space includes two product molding spaces, there can be provided a manufacturing method having the above-described effects. Further, even if the resin-injection-use molding space or the resin-discharging-use molding space is not provided independently for each of the individual product molding spaces in the molding space, for example, providing a common resin-injection-use molding space or a common resin-discharging-use molding space makes it possible to achieve efficient spatial arrangement in the molding space. Therefore, an efficient manufacturing method for in-mold injection-molded decorated articles can be provided in terms of size reduction of the mold or effective use of molding resin to be used or the like.

According to the fifth to seventh aspects of the present invention, various molding methods which have been in use for injection molding can be applied to the manufacturing method for injection-molded and in-mold decorated articles according to the present invention. For example, performing the injection of molding resin into the molding space in hermetic closed state makes it possible to eliminate molding resin that would be exposed at mold peripheral portions. Also, reducing the capacity of the molding space after the injection of molding resin makes it possible to successfully perform the injection of the molding resin even in such cases where the molding space is a thin-type space or the like. Moreover, density of the injected molding resin can be enhanced, making it possible to manufacture high-density molded articles.

According to the eighth aspect of the present invention, in the mold for injection-molding with in-mold decoration, the molding space comprises a product molding space, and a resin-discharging-use molding space into which the molding resin injected into the product molding space is let to flow. As a result of this, it becomes possible to fulfill manufacture of a molded article in which while the molding resin is injected into the product molding space, part of the injected molding resin can be discharged from the product molding space into the resin-discharging-use molding space, thereby filling the molding resin into the product molding space, and in the product molding space, flows of the molding resin directed from the position of the injection of the molding resin for the discharge toward the resin-discharging-use molding space can be formed. Accordingly, occurrence of welds can reliably be prevented in the product molding space. Also, even if such a weld occurs, the weld occurs within the product molding space that is not used as a product part but is a removal portion, causing no problems.

Furthermore, gas contained in the molding resin is also let to flow into the resin-discharging-use molding space along the restricted flow direction, being accumulated there together with the molding resin. Thus, no gas stagnated portion is formed in the product molding space, so that resin burns due to gas can be prevented.

Accordingly, there can be provided a mold for injection-molding with in-mold decoration, with which mold there occur no welds or resin burns on the surface of the molded article formed by the product molding space, which becomes a final product part, thus allowing the product quality to be improved.

According to the ninth aspect of the invention, the molding space further includes a resin-injection-use molding space into which the molding resin is injected from outside of the molding space. As a result of this, it becomes possible to fulfill manufacture of a molded article in which while the molding resin is injected from outside of the molding space into the resin-injection-use molding space, the injected molding resin can be made to flow from the resin-injection-use molding space into the product molding space, by which the injection of the molding resin into the product molding space can be carried out. Thus, an injection hole portion through which the molding resin is injected is not provided directly in the product molding space but provided in the resin-injection-use molding space, which is another space. As a result of this, it becomes possible to provide a metal mold for in-mold injection-molding decoration, with which mold damage of the decorating film due to jet pressure of the molding resin injected through the injection hole portion or the like can be prevented, and besides more uniformized injection of the molding resin into the product molding space can be achieved.

According to the tenth aspect of the present invention, placement of the decorating film can be held while looseness of the decorating film is removed by putting the decorating film into close contact therewith by the film holding portion. As a result of this, there occurs no formation of marks of wrinkles or looseness of the decorating film on the surface of the molded article, and moreover the decoration can be achieved at specified sites on the surface of the molded article with high reliability. Thus, in-mold injection-molded decorated articles of high precision can be manufactured.

According to the eleventh aspect of the present invention, at the film holding portion or its vicinities are provided a plurality of suction portions which serve for sucking and holding the decorating film in contact therewith. As a result of this, the holding of the decorating film can be achieved more reliably.

According to the twelfth aspect of the present invention, the first mold element or the second mold element includes the recessed portion, and an engagement portion which is engageable with the recessed portion, in which tension can be imparted to the decorating film by the recessed portion and the engagement portion being engaged with each other via the decorating film. As a result of this, in the clamping of the first mold element and the second mold element via the decorating film, tension can automatically be imparted to the decorating film, so that occurrence of wrinkles or looseness of the decorating film in the molding space can be suppressed.

According to the thirteenth aspect of the present invention, air vent portions are provided in the resin-discharging-use molding space. As a result of this, gas converged to the resin-discharging-use molding space can reliably be removed through the individual air vent portions. Also, the air vent portions are positioned at places near the periphery of the product molding space in the resin-discharging-use molding space, by which gases slightly remaining in the product molding space can be removed concurrently.

According to the fourteenth and fifteenth aspects of the present invention, even in cases where the molding space includes a plurality of the resin-injection-use molding spaces or a plurality of the resin-discharging-use molding spaces, the effects by the foregoing individual aspects can be obtained.

### BRIEF DESCRIPTION OF THE DRAWINGS

These and other aspects and features of the present invention will become clear from the following description taken in conjunction with the preferred embodiments thereof with reference to the accompanying drawings, in which:
Fig. 1 is a schematic sectional view showing a state before injection of molding resin in an injection-molded and in-mold decorated article manufacturing method according to a first embodiment of the present invention;
Fig. 2 is a schematic sectional view showing a state of injection of the molding resin in the injection-molded and in-mold decorated article manufacturing method of the first embodiment;
Fig. 3 is a schematic sectional view showing a state that the molding resin has been filled in the injection-molded and in-mold decorated article manufacturing method of the first embodiment;
Fig. 4 is a schematic sectional view showing a state that the molded article is released from the mold in the injection-molded and in-mold decorated article manufacturing method of the first embodiment;
Fig. 5 is a schematic plan view of a first mold element of the first embodiment;
Figs. 6A, 6B, 6C and 6D are schematic sectional views of the first mold element of Fig. 5, where Fig. 6A is a sectional view taken along the line B - B, Fig. 6B is a sectional view taken along the line C - C, Fig. 6C is a sectional view taken along the line D - D, and Fig. 6D is a sectional view taken along the line E - E;
Fig. 7 is a schematic plan view of a second mold element of the first embodiment;
Figs. 8A and 8B are schematic sectional views of the second mold element of Fig. 7, where Fig. 8A is a sectional view taken along the line G - G, and Fig. 8B is a sectional view taken along the line F - F;
Fig. 9 is a spatial planar arrangement view of the molding space of the first embodiment;
Fig. 10 is a spatial arrangement view in a cross section taken along the line A - A of Fig. 9;
Figs. 11A and 11B are partly enlarged sectional views showing stretching recesses of the first embodiment, where Fig. 11A shows a state before engagement of the engagement member, and Fig. 11B shows a state in which the engagement member is engaged;
Fig. 12 is a spatial arrangement view showing the directions of flows of the molding resin in the molding space of the first embodiment;
Fig. 13 is a schematic plan view of an injection-molded and in-mold decorated article of the first embodiment;
Fig. 14 is a schematic plan view of frame molded article parts of the first embodiment;
Fig. 15 is a schematic plan view of product molded article parts of the first embodiment;
Fig. 16 is a schematic sectional view showing the structure of a decorating film of the first embodiment;
Fig. 17 is a schematic sectional view of a decorating film according to another example of the first embodiment;
Fig. 18 is a schematic sectional view showing an injection-molded and in-mold decorated article (injection-compression-molded and in-mold decorated article) manufacturing method according to a second embodiment of the present invention, showing a state before the injection of molding resin;
Fig. 19 is a schematic sectional view showing a state of injection of molding resin in the injection-molded and in-mold decorated article manufacturing method of the second embodiment;
Fig. 20 is a schematic sectional view showing a state that the molding resin has been filled and compressed in the injection-molded and in-mold decorated article manufacturing method of the second embodiment;
Fig. 21 is a schematic sectional view showing a state that the molded article is released from the mold in the injection-molded and in-mold decorated article manufacturing method of the second embodiment;
Fig. 22 is a schematic plan view of the first mold element of the second embodiment;
Fig. 23 is a spatial arrangement view of the molding space according to Working Example 1 in the respective embodiments of the present invention;
Fig. 24 is a spatial arrangement view of the molding space according to Working Example 2;
Fig. 25 is a spatial arrangement view of the molding space according to Working Example 3;
Fig. 26 is a spatial arrangement view of the molding space according to Working Example 4;
Fig. 27 is a spatial arrangement view of the molding space according to Working Example 5;
Fig. 28 is a spatial arrangement view of the molding space according to Working Example 6;
Fig. 29 is a spatial arrangement view of the molding space according to Working Example 7;
Fig. 30 is a spatial arrangement view of the molding space according to Working Example 8;
Fig. 31 is a spatial arrangement view of the molding space according to Working Example 9;
Fig. 32 is a spatial arrangement view of the molding space according to Working Example 10;
Fig. 33 is a spatial arrangement view of the molding space according to Working Example 11;
Fig. 34 is a spatial arrangement view of the molding space according to Working Example 12;
Fig. 35 is a spatial arrangement view of the molding space according to Working Example 13;
Figs. 36A, 36B, 36C and 36D are schematic plan views of injection-molded and in-mold decorated articles in the respective embodiments, where Fig. 36A shows a molded article having no transparent window portions, Fig. 36B shows a molded article having a transparent window portion stretching over the generally whole article, Fig. 36C shows a molded article having a transparent window portion in part, and Fig. 36D shows a molded article which is formed transparent in the entirety of the article;
Fig. 37 is a schematic plan view showing an example of the form of partitioning protrusions according to the respective embodiments;
Fig. 38 is a schematic plan view showing another example of the form of partitioning protrusions;
Fig. 39 is a schematic plan view showing yet another example of the form of partitioning protrusions;
Fig. 40 is a schematic plan view showing still another example of the form of partitioning protrusions;
Fig. 41 is a schematic plan view showing still another example of the form of partitioning protrusions;
Fig. 42 is a schematic plan view showing an example of the placement aspect of suction pins according to the respective embodiments;
Fig. 43 is a schematic plan view showing another example of the placement aspect of suction pins;
Fig. 44 is a schematic plan view showing still another example of the placement aspect of suction pins;
Fig. 45 is a schematic plan view showing still another example of the placement aspect of suction pins;
Fig. 46 is a schematic plan view showing still another example of the placement aspect of suction pins;
Fig. 47 is a schematic plan view showing an example of the placement aspect of the stretching recess according to the respective embodiments;
Fig. 48 is a schematic plan view showing still another example of the placement aspect of the stretching recess;
Fig. 49 is a schematic plan view showing still another example of the placement aspect of the stretching recess;
Figs. 50A and 50B are views showing an injection-molded article manufacturing method according to a prior art, where Fig. 50A is a sectional view of the mold and Fig. 50B is a view showing the directions of flows of the molding resin in the mold;
Fig. 51 is a view showing a state that a weld has occurred in an injection-molded article of the prior art; and
Fig. 52 is a view showing a state that a resin burn has occurred in an injection-molded article of the prior art.

### BEST MODE FOR CARRYING OUT THE INVENTION

Before the description of embodiments of the present invention proceeds, definitions of the terms used in Claims and Specification of the present invention are described.

The term "molding space" refers to a space which is defined by a decorating film and a first mold element when the decorating film is set between the first mold element and a second mold element placed in opposition to each other, where the space makes it possible to form a resin molded article (i.e., a whole molded article including a product portion and a removal portion of the formation of the product) corresponding to the form of the space when the resin is injected into the space and further solidified.

The term "product molding space" refers to a space where a resin molded article that can become the product portion out of the molding space is formed, i.e., a space where the product portion derived from removing the removal portion from the resin molded article is formed.

The term "resin-discharging-use molding space" refers to a space which is part of the molding space, and which is formed adjacent to and communicative with at least part of the periphery of the product molding space, and into which part of the molding resin injected into the product molding space is filled via the product molding space, the resin-discharging-use molding space being a space necessarily provided in the molding space of the present invention. In other words, the resin-discharging-use molding space is a space into which part of the molding resin injected into the product molding space is discharged from the product molding space so as to flow into the space. The part of the resin molded article formed in this resin-discharge space is in many cases removed from the resin molded article as the removal portion, so that a product is formed from the resin molded article by this removal. However, it is also possible that the part formed in the resin-discharging-use molding space is used as part of the product portion without being removed. It is noted that the resin-discharging-use molding space may be referred also as an added molding space.

The term "resin-injection-use molding space" refers to a space which is part of the molding space, and which is formed adjacent to and communicative with at least part of the periphery of the product molding space, and moreover into which the molding resin is injected from outside of the molding space. The resin-injection-use molding space is also a space into which the molding resin injected from outside is made to flow into the product molding space via the resin-injection-use molding space so that the molding resin is injected into the product molding space. The part of the resin molded article formed in this resin-injection-use molding space is, in many cases, removed from the resin molded article as the removal portion, so that a product is formed from the resin molded article by this removal. However, it is also possible that the part formed in the resin-injection-use molding space is used as part of the product portion without being removed. It is noted that the resin-injection-use molding space may be referred also as an auxiliary molding space.

With regard to the description of embodiments of the present invention, first, the conceptual constitution of the present invention is described in detail.

In the present invention, an injection-molding and in-mold decorating method is adopted as the decoration method for an injection-molded article. The injection-molding and in-mold decoration method is a method including, with a decorating film set between a first mold element and a second mold element of an injection mold, clamping the molds together, injecting molten molding resin from a gate portion into a molding space defined by the decorating film and the first mold element, and solidifying the injected molding resin, to thereby obtain an injection-molded and in-mold decorated article in which the decorating film and the molding resin have been integrated together.

Besides, in some cases, a substrate sheet forming the decorating film may be peeled off in a later step. Since the injection-molding and in-mold decorating method uses a decorating film that is previously printing processed, almost no effects are produced on the productivity even if the decoration is of multiple colors. Also, since the decorating film is formed in compliance with a B mold configuration, decoration can be applied even to three-dimensional configuration surfaces, to which the decoration could not be applied with normal printing. Moreover, patterning is possible on the decorating film.

Further, in the present invention, the molding space comprises a plurality of product molding spaces and outer-outer-frame molding spaces surrounding the product molding spaces, respectively, the product molding spaces and the outer-frame molding spaces communicating with each other, respectively. For example, the outer-frame molding space comprises a resin-injection-use molding space closer to the gate portion, and a resin-discharging-use molding space located away from the gate portion and with the product molding space therebetween, where after or while molten molding resin is filled into the product molding spaces via the resin-injection-use molding spaces, part of the molding resin filled into the product molding spaces is let to flow into the resin-discharging-use molding spaces and thereby filled in.

Also, by the formation of the individual spaces, it can be said that the first mold element has, in its recessed portions formed in its surface, a product molded article forming portion capable of forming the product molding space between the first mold element and the decorating film, an injection-space molded article forming portion capable of forming the resin-injection-use molding space between the first mold element and the decorating film, and a discharge-space molded article forming portion capable of forming the resin-discharging-use molding space between the first mold element and the decorating film. Also, the injection-space molded article forming portion is positioned adjacent to the product molding space forming portion, and the discharge-space molded article forming portion is positioned adjacent to the product molding space forming portion.

Then, for such fluidization of the molding resin as described above, the present invention adopts a metal mold for injection-molded and in-mold decorated, the mold being characterized in that the molding space is formed plate-like or other rectangular shaped and that given an average cross-sectional area S1 (mm²) of the product molding spaces, an average thickness T1 (mm) of the product molding spaces, an average cross-sectional area S2 (mm²) of the outer-frame molding spaces, and an average thickness T2 (mm) of the outer-frame molding spaces, there hold relations that S1 ≥ 4×S2 and that T1 ≥ T2.

That is, by setting the average thickness and average cross-sectional area of the product molding space to ones not less than the average thickness and average cross-sectional area of the outer-frame molding spaces, there can be made up a mold which allows molten molding resin to be filled into the product molding spaces, for example, via the resin-injection-use molding spaces and thereafter filled into the resin-discharging-use molding spaces. In this connection, these numerical values can be set from experiment results shown in Table 1:

**Table 1:**

| Molded article No. | 1 | 2 | 3 | 4 | 5 | 6 | 7 | 8 |
|---|---|---|---|---|---|---|---|---|
| Average cross-sectional area of product molding space portions, S1 (mm²) | 8.0 | 8.0 | 8.0 | 8.0 | 6.0 | 4.0 | 3.5 | 4.0 |
| Average thickness of product molding space portions, T1 (mm) | 0.8 | 1.2 | 1.0 | 1.1 | 1.1 | 1.1 | 1.1 | 1.0 |
| Average cross-sectional area of outer-frame molding space portions, S2 (mm²) | 1.0 | 1.0 | 1.0 | 1.0 | 1.0 | 1.0 | 1.0 | 1.0 |
| Average thickness of outer-frame molding 1.0 1.0 1.0 1.0 1.0 1.0 1.0 1.0 space portions, T2 (mm) | 1.0 | 1.0 | 1.0 | 1.0 | 1.0 | 1.0 | 1.0 | 1.0 |
| 4 × S2 | 4.0 | 4.0 | 4.0 | 4.0 | 4.0 | 4.0 | 4.0 | 4.0 |
| Acceptance or Rejection as to desired flow (o) or not (×) of molding resin | × | o | o | o | o | o | × | o |

In test results of Table 1, with respect to the acceptance or rejection of desired flow of the molding resin, symbol "o" shows a case where after or while the molten molding resin were filled into the product molding spaces via the resin-injection-use molding spaces, part of the molding resin filled into the product molding spaces flowed into the resin-discharging-use molding spaces and filled therein, and symbol "×" shows a case where not. It is noted that the "cases where not: ×" , in which flows themselves of the molding resin into the resin-discharging-use molding spaces were observed but not determined as a completely filled state, are distinguished from the "cases where filled: o."

As a result of formation of a mold having such a configuration, since the fore end portion of the molding resin injected into the molding space is fed into the resin-discharging-use molding spaces, gases generated in the molding resin can be fed into the resin-discharging-use molding spaces along with the molding resin, so that the remaining amount of gases in the product molding spaces can be reduced. Also, since collisions of the molten molding resin itself in vicinities of central portions of the product molding spaces can be avoided, resin burns due to the gases never occur. Further, since collisions of the molten molding resin itself in vicinities of central portions of the product molding spaces of the product molding spaces can be avoided, a site of occurrence of a weld, if any, can be shifted to the resin-discharging-use molding space.

In addition, with the adoption of the injection-molding and in-mold decorating method, it is highly likely that a large wrinkle occurs at a position of the decorating film corresponding to the position of occurrence of the weld, causing the appearance of the injection-molded and in-mold decorated article to be impaired. However, with the above-described constitution, since the site of the occurrence of the weld can be shifted to the resin-discharging-use molding space, this problem can be solved at the same time.

Furthermore, in the present invention, the mold for injection-molding with in-mold decoration which mold is capable of preventing occurrence of small wrinkles of the decorating film that could occur to the product molding spaces due to the adoption of the injection-molding and in-mold decorating method may be so structured as to have a first mold element and a second mold element and have partitioning protrusions provided at the outer-frame molding spaces that surround the product molding spaces, respectively, of the recessed surface of the second mold element.

In the injection-molding and in-mold decorating method, generally, the decorating film would be burdened with dragging loads due to the flow of the molten molding resin, so that the decorating film would be loosened resultantly. However, with the partitioning protrusions provided in the recessed surface of the second mold element, the decorating film can be made less liable to loosening because of the following reasons.

That is, molten molding resin, after filled into the resin-injection-use molding spaces, go beyond the partitioning protrusions provided between the resin-injection-use molding spaces and the product molding spaces, entering into the product molding spaces. In this case, the molten molding resin is filled into the product molding spaces while holding and stretching the decorating film by the partitioning protrusions. Accordingly, it is less likely that small wrinkles occur to the decorating film surrounded by the partitioning protrusions.

It is noted that positions where the partitioning protrusions are formed may be contiguous to the product molding space or separate away therefrom. That is, the molding space surrounded by the partitioning protrusions may either be the product molding space alone or include the product molding spaces and the outer-frame molding space. Further, the partitioning protrusions may be provided continuously like a loop or discontinuously.

Further, in the present invention, suction pins may be provided at the partitioning protrusions in the mold for injection-molding with in-mold decoration.

The suction pins have a function of sucking and fixing the decorating film to the second mold element as well as a function of removing air or contaminations remaining between the decorating film and the second mold element as well as the gases generated from the substrate sheet of the decorating film or the like. The suction pins may be formed into a cylindrical or block-like or other rectangular shapes. The suction pins may also be provided within the molding spaces surrounded by the partitioning protrusions.

Moreover, in the present invention, the mold for injection-molding with in-mold decoration may be provided with a stretching recess in the reference surface of the outer periphery of the outer-frame molding spaces.

Even if the molding spaces surrounded by the partitioning protrusions are formed without any small wrinkles, it is still likely that small wrinkles occur outside the partitioning protrusions, particularly in the resin-discharging-use molding spaces. Because of the small wrinkles, the position of decoration of the injection-molded and in-mold decorated article may be slightly shifted.

However, with the stretching recess provided in the mold for injection-molding with in-mold decoration, any looseness of the decorating film that has occurred in the resin-discharging-use molding spaces is relieved by the stretching recess, and moreover the tension of the whole decorating film in the molding space is maintained at an appropriate level. Therefore, the position of decoration of the injection-molded and in-mold decorated article is never shifted.

Furthermore, the stretching recess may be provided continuously like a loop or discontinuously. In addition, it is preferable to provide the stretching recess on the entire outer periphery of the molding spaces like a loop, because their effects are produced uniformly in every direction.

Also in the present invention, the mold for injection-molding with in-mold decoration may be provided with air vent pins at positions contiguous to the product molding spaces in the resin-discharging-use molding space.

In the injection-molding and in-mold decorating method, since the decorating film is set on the second mold element side during the molding, gases of the molding resin derived from the second mold element side less escape, so that molding resin gases less escape as compared with common injection molds. This necessitates a contraption for gases escape to the first mold element side. Also, the molding resin gases are contained relatively more in amount at fore end portions of the molten molding resin.

Thus, with the provision of the air vent pins at positions where the fore end portions of the molten molding resin on the first mold element side are finally concentrated (i.e., the resin-discharging-use molding spaces), the molding resin gases concentrated at the resin-discharging-use molding spaces can be let to escape through the gaps between the air vent pins and the first mold element. Particularly when the air vent pins are provided at positions nearest to the product molding spaces (i.e., positions contiguous to the product molding spaces), not only the molding resin gas converged to the resin-discharging-use molding space but also the molding resin gas that could slightly remain in the product molding spaces can be let to efficiently escape.

The width over which each air vent pin and the product molding space is in contact with each other is preferably 0.1 - 1.0 mm. With the contact width larger than 1.0 mm, the portion of this contact would remain as a mark in the product molding spaces even after the cutting of the injection-molded and in-mold decorated article into the product molding spaces and the resin-discharging-use molding space, causing the appearance to worsen. On the other hand, with the contact portion smaller than 0.1 mm, the molding resin gases slightly remaining in the product molding spaces less escape.

In addition, the air vent pins may be formed into a cylindrical or other block-like rectangular shape.

As shown above, by performing injection-molding and in-mold decorating with the use of this mold for injection-molding with in-mold decoration, there can be obtained an injection-molded and in-mold decorated article which has a plurality of product molding portions and outer-frame molding portions communicating with the product molding portions, respectively, and in which an air vent mark is formed at the resin-discharging-use molding portions in the outer-frame molding portions contiguous to the product molding portions. It is noted that the air vent mark may extend through or not.

### (First Embodiment)

Hereinbelow, a first embodiment of the present invention is described in detail with reference to the accompanying drawings. In the accompanying drawings to be used in the description of individual embodiments of the invention, like component members are designated by like reference numerals.

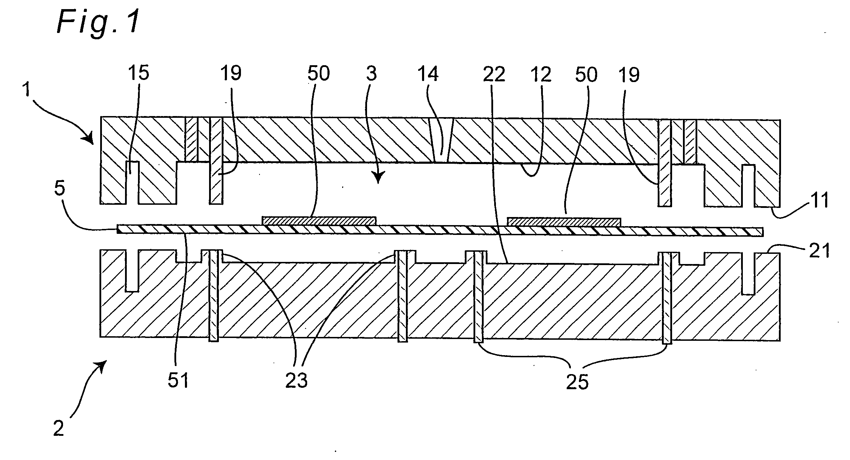

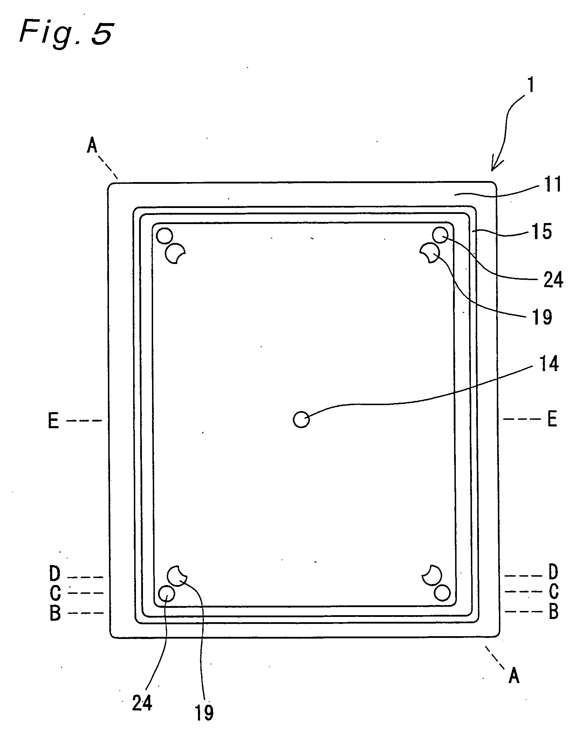

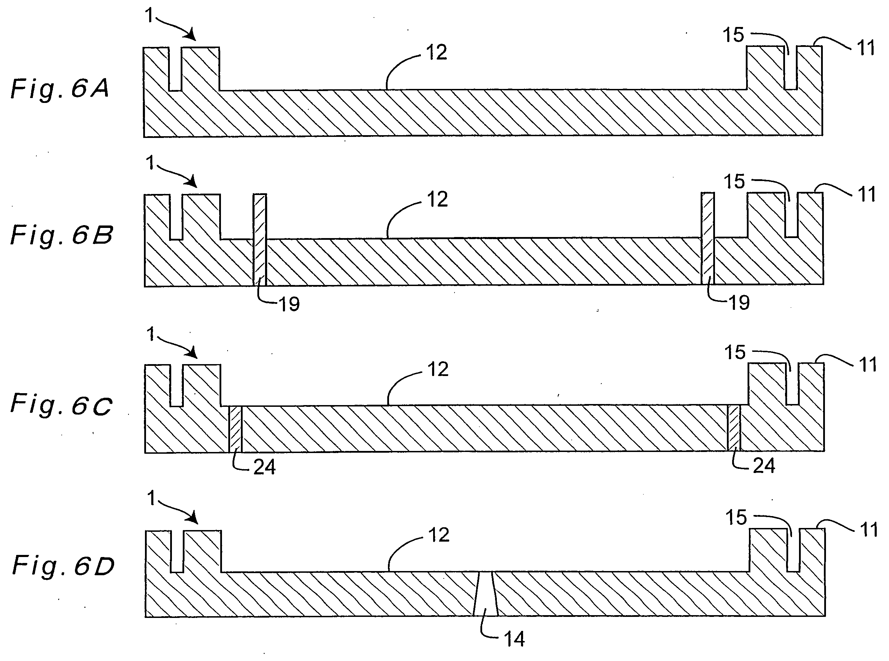

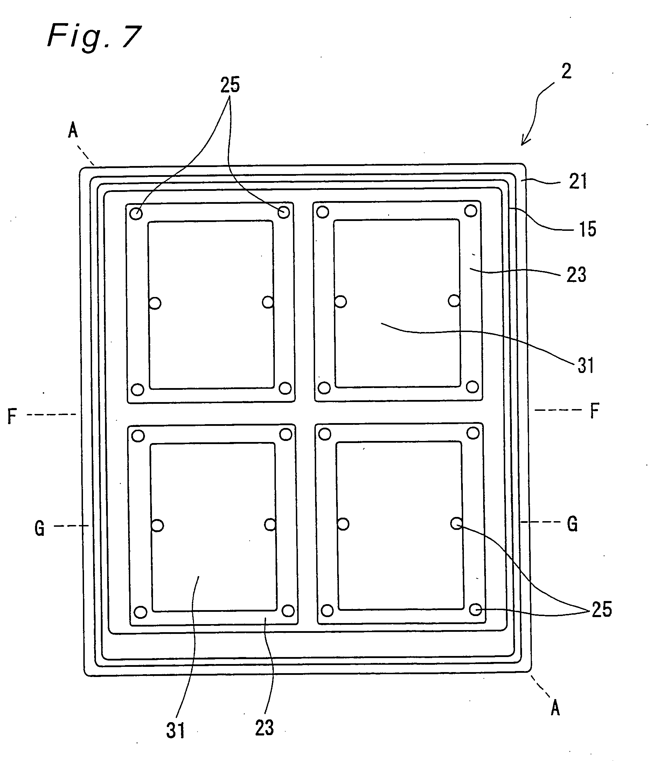

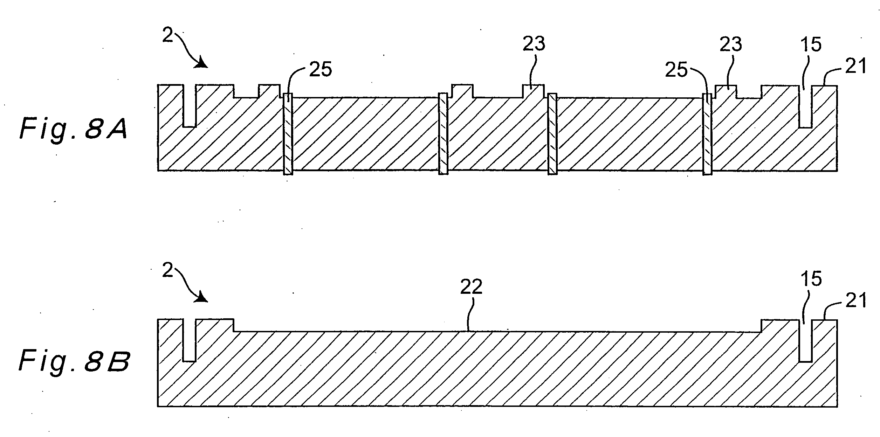

First, as schematic explanatory views schematically showing a manufacturing method for injection-molded and in-mold decorated articles according to this first embodiment, schematic sectional views of a first mold element and a second mold element are shown in Figs. 1, 2, 3 and 4. Also, a plan view of the first mold element is shown in Fig. 5, a sectional view at line B - B of the first mold element of Fig. 5 is shown in Fig. 6A, a sectional view at line C - C is shown in Fig. 6B, a sectional view at line D - D is shown in Fig. 6C, and a sectional view at line E - E is shown in Fig. 6D. Further, a plan view of the second mold element is shown in Fig. 7, a sectional view at line F - F of the second mold element of Fig. 7 is shown in Fig. 8A, and a sectional view at line G - G is shown in Fig. 8B. It is noted that the cross sections of the first mold element shown in Figs. 1 to 4 are cross sections taken along the line A - A of the first mold element of Fig. 5, and the cross sections of the first mold element are cross sections taken along the line A - A of the second mold element of Fig. 7.

First, as shown in Fig. 1, in the manufacturing method for injection-molded and in-mold decorated articles according to the first embodiment, two molds of a first mold element 1 and a second mold element 2 constituting the metal mold for injection-molding with in-mold decoration are used, and the molds 1, 2 are so placed that their surfaces on which recessed portions are formed confront each other, and a decorating film 5 for adding patterns on the surface of the resin molded article is placed between the molds 1, 2. In this state, molten molding resin is injected a molding space defined by the recessed portion of the first mold element 1 and the surface of the decorating film 5, and while the molding resin is cooled and solidified, the surface of the molding resin in contact with the decorating film 5 is decorated, by which an injection-molded and in-mold decorated article can be obtained.

The first mold element 1, as shown in Fig. 5 and Figs. 6A to 6D, has a generally quadrilateral shape as viewed in a plan view, and at four peripheral edge portions on its one surface, a reference surface 11, which serves as the upper surface of protruded portion to be brought into contact with the second mold element 2, is formed in a continuation along the quadrilateral four peripheral edge portions. In an inner portion surrounded by the reference surface 11 is formed a recessed portion 12 having a configuration corresponding to the external shape of the resin molded article. Further, between the recessed portion 12 and the reference surface 11, a later-described stretching recess 15 which is a portion for imparting tension to the decorating film 5 is formed along the inner periphery of the reference surface 11.

Also, as shown in Figs. 5 and 6D, a gate portion 14 which is an injection port for performing injection of molten molding resin is formed at a place near a vertical and horizontal center of the first mold element 1, i.e., near a center of the inner bottom portion of the recessed portion 12. In addition, air vent pins 19 are provided, as required, at the inner bottom portions of the recessed portion 12 of the first mold element 1 in this first embodiment as shown in Figs. 5 and Fig. 6B, but the makeup of the air vent pins 19 will be described later.

Meanwhile, as shown in Fig. 7 and Figs. 8A and 8B, the second mold element is generally equal in size of the external shape to the first mold element 1 so as to be correspondent thereto, being formed into a generally quadrilateral shape, as viewed in a plan view, with generally equal placement and width to the reference surface 11 of the first mold element 1, where a reference surface 21, which serves as the upper surface of protruded portion to be brought into direct contact with the reference surface 11 of the first mold element 1, is formed in continuation to the quadrilateral peripheries. Further, in an inner portion surrounded by the reference surface 21 are formed a recessed portion 22 having a configuration corresponding to the external shape of the resin molded article and a later-described stretching recess 15 which is a portion for imparting tension to the decorating film 5.

The first mold element 1 and the second mold element 2 having structures shown above are placed in opposition to each other in such alignment that their respective reference surface 11 and the reference surface 21 confront each other (i.e., so that the reference surface 11 and the reference surface 21 can be coincident with each other), and the decorating film 5 is placed between the first mold element 1 and the second mold element 2 (the state shown in Fig. 1). As a result of this, it has become possible to make the inner space of the recessed portion 12 of the first mold element 1 and the inner space of the recessed portion 22 of the second mold element 2 placed in contact with each other via the decorating film 5. In such a state, the reference surface 11 of the first mold element 1 and the reference surface 21 of the second mold element 2 are clamped together so as to be brought into contact with each other via the decorating film 5, by which a molding space 3 is formed between the decorating film 5 and the first mold element 1. The spatial configuration of the molding space 3, i.e., height, width and thickness of the space correspond to specified height, width and thickness of a resin molded article to be formed. By the molding space 3 being formed in this way, an injection-molded and in-mold decorated article 10 of specified dimensions can be obtained by injecting molten resin (molding resin) 4 into the molding space 3 and thereafter solidifying the resin.

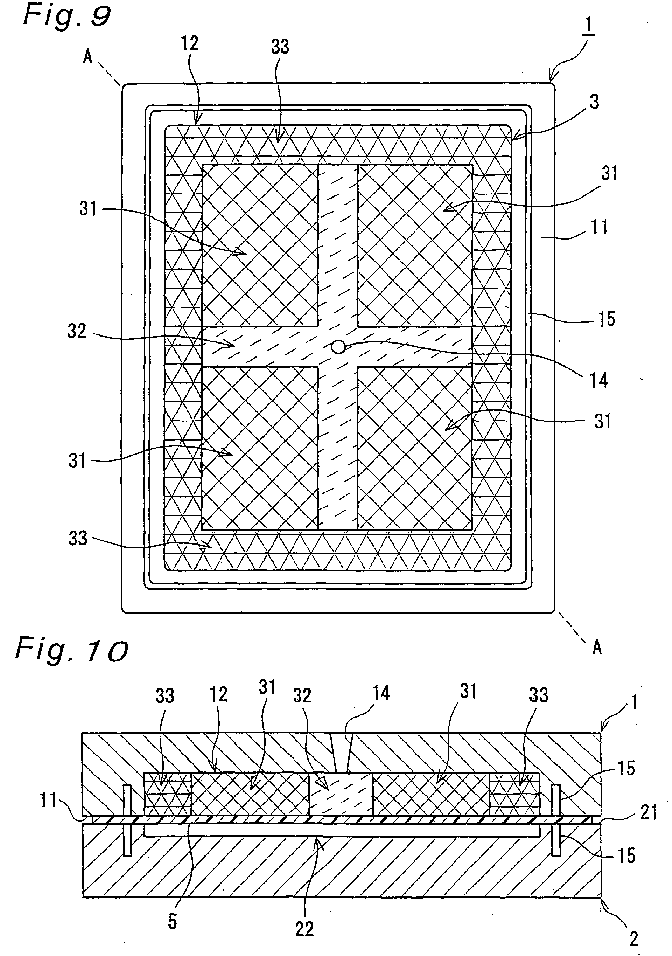

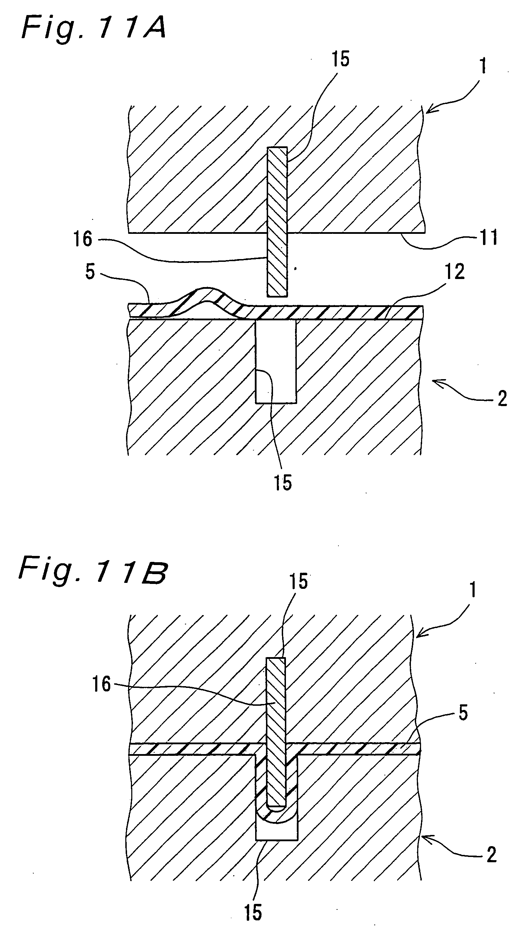

It is noted here that the molding space 3 formed by the first mold element 1 and the second mold element 2 being clamped with the decorating film 5 sandwiched therebetween has a plurality of spaces. As an example, the molding space 3 includes product molding spaces, resin-discharging-use molding space and resin-injection-use molding space. A planar arrangement view of individual spaces in such a molding space 3 is shown in Fig. 9, and a cross-sectional view at line A - A of Fig. 9 is shown in Fig. 10. By using these drawings, the placement of the individual spaces is explained in detail. It is noted that in the plan view of Fig. 9, those spaces are placed on a plan view of the first mold element as the first mold element 1 is viewed from the surface of the decorating film 5. Also, Fig. 9 is a drawing intended to clarify the placement of the individual spaces and, for an easier understanding thereof, only principal components of the first mold element 1 are shown while details of the structure are partly omitted in the figure. Besides, in Figs. 9 and 10, hatching patterns are added in order to make it easier to visually recognize those spaces.

As shown in Figs. 9 and 10, in the molding space 3 surrounded and defined by the recessed portion 12 of the first mold element 1 and the decorating film 5, four product molding spaces 31 (which are an example of the first product molding space and the second product molding space) are placed so as to be generally equidistantly spaced from one another without contact therebetween. These product molding spaces 31 are spaces where portions that form final product portions out of a resin molded article formed by the molding spaces. As a result of such placement of four product molding spaces 31, the metal mold for injection-molding with in-mold decoration comprises the first mold element 1 and the second mold element 2 is a multiple metal mold capable of molding a plurality of products at one time.

Further, the molding space 3 includes a resin-injection-use molding space 32 (an example of the common resin-injection-use molding space) and a resin-discharging-use molding space 33 (an example of the common resin-discharging-use molding space), the spaces being spaces respectively communicating with and adjacent to part of outer peripheries of the individual product molding spaces 31. The resin-injection-use molding space 32 is placed so as to communicate with the resin-injection-use gate portion 14 placed at a place near the generally center of the first mold element 1. More concretely, as shown in Fig. 9, the resin-injection-use molding space 32 is placed in a generally cross shape, as viewed in a plan view, between the individual four product molding spaces 31. On the other hand, the resin-discharging-use molding space 33 is placed in a generally O-shape, as viewed in a plan view, between the inner peripheral portions of the recessed portion 12 of the first mold element 1 and the four product molding spaces 31. Also, respective boundary portions among the product molding spaces 31, the resin-injection-use molding space 32 and the resin-discharging-use molding space 33 are communicated with each other without any partitioning. As a result of this, it has become possible that the resin injected through the gate portion 14 into the resin-injection-use molding space 32, while filling the resin-injection-use molding space 32 itself, partly flows into the individual product molding spaces 31 so as to be filled into the individual product molding spaces 31, and moreover part of the resin that has flowed into the individual product molding spaces 31 further flows in so as to be discharged into the resin-discharging-use molding space 33. In addition, in Fig. 10, a space surrounded by the recessed portion 12 of the first mold element 1 and the decorating film 5 is the molding space 3, while a space surrounded by the recessed portion 22 of the second mold element 2 and the decorating film 5 is present in addition and this space is a space which disappears when pressed downward in the figure by the resin injection into the molding space 3, i.e., pressed against the inner bottom surface of the recessed portion 22 of the second mold element 2. Further, the resin-injection-use molding space 32 and the resin-discharging-use molding space 33 are placed so as to surround the outer peripheries of the individual product molding spaces 31, and therefore it can be said that outer-frame molding spaces which are spaces of outer frame portions surrounding the individual product molding spaces 31 are made up by the resin-injection-use molding space 32 and the resin-discharging-use molding space 33.

In connection to the placement of individual spaces shown above, the structure of the second mold element 2 is further explained. As shown in Figs. 7 and 8A, partitioning protrusions 23 protruded toward the first mold element 1 to be placed in opposition thereto are placed in the inner bottom surface of the recessed portion 22 of the second mold element 2 so as to surround the outer peripheries of its portions corresponding to the respective product molding spaces 31. That is, the individual partitioning protrusions 23 formed to surround the entire outer peripheries of the portions corresponding to the respective product molding spaces 31 are placed and formed in vicinities of boundaries between the resin-injection-use molding space 32 and the resin-discharging-use molding space 33 and the individual product molding spaces 31. Also, as shown in Figs. 7 and 8A, a plurality of suction pins 25 are provided on upper surfaces of the respective partitioning protrusions 23 and in vicinities of the respective partitioning protrusions 23 in molding spaces 3 surrounded by the respective partitioning protrusions 23. It is noted that the individual suction pins 25 are connected to a suction device via unshown suction passages.

When molding resin is injected into the individual product molding spaces 31, the decorating film 5 is brought into close contact with the inner bottom portion of the recessed portion 22 of the second mold element 2 while being stretched. In this case, these partitioning protrusions 23 having functions of, by making the decorating film 5 brought into close contact with the surfaces of the protrusive bump portions, increasing the surface area of the close contact of the decorating film 5, thereby preventing occurrence of looseness or the like of the decorating film 5 and moreover holding the close contact state of the decorating film 5 to the inner bottom surface of the recessed portion 22. Moreover, by the provision of the suction pins 25 on the individual partitioning protrusions 23 or in vicinities thereof, it is more reliably ensured to achieve and hold the close contact of the decorating film 5 to the respective protruded portions. It is noted that in this embodiment, the partitioning protrusions 23 are an example of the film holding portion for holding the placement of the decorating film 5 while removing its looseness, and the suction pins 25 are an example of the suction part.

Next described are the stretching recesses 15, which are hollow recessed portions provided in the reference surface 11 and the recessed portion 12 that are brought into contact with each other via the decorating film 5 during the process of clamping of the first mold element 1 and the second mold element 2. The stretching recesses 15 are provided in order to reduce the looseness of the decorating film 5 occurring in the molding space 3 when the decorating film 5 is placed between the first mold element 1 and the second mold element 2.

Now a partly enlarged schematic sectional view of a vicinity of the stretching recesses 15 in a pre-clamping state in which the decorating film 5 is set between the first mold element 1 and the second mold element 2 is shown in Fig. 11A, and a partly enlarged schematic sectional view of a clamped state is shown in Fig. 11B. With reference to these figures, the function of the stretching recesses 15 is explained in detail.

As shown in Fig. 11A, the stretching recess 15 of the first mold element 1 is engaged with an engagement member 16 which is an example of the engagement part to be engaged with the hollow recessed portion of the stretching recess 15, in which engagement state the engagement member 16 is protruded from the reference surface 11 so as to be engaged also with the stretching recess 15 of the second mold element 2. Also, the decorating film 5 is set on the second mold element 2 set below in the figure, where the decorating film 5 is in a loosened state.

In this state shown above, when the first mold element 1 and the second mold element 2 are clamped together as shown in Fig. 11B, lower portion of the engagement member 16 in the figure is engaged with the stretching recess 15 of the second mold element 2. In this case, by this engagement being effectuated via the decorating film 5, part of the decorating film 5 is pushed into the stretching recess 15 of the second mold element 2, absorbing the looseness so that occurrence of wrinkles on the decorating film 5 can be inhibited.

This embodiment has been described on a case where the stretching recess 15 is formed in the first mold element 1 and the engagement member 16 is engaged with this stretching recess 15. However, the present invention is not limited to such a case. For example, instead of such a case, protruded portions may preliminarily be formed in the first mold element 1. Even in such a case, making the bump portions engaged with the stretching recesses 15 of the second mold element 2 allows the same effects as with the use of the engagement member 16 to be obtained.

The stretching recess 15 is provided preferably on the entire outer periphery of the molding space 3, and preferably with a depth of 0.5 to 5 mm and a width of 0.5 to 7 mm. Too small depths and widths would lead to a weaker reduction effect for the looseness of the decorating film 5, while too large depths and widths would cause the strength of the metal mold to lower.

Further, the stretching recess 15 may be provided either on both the A mold element 1 and the B mold element 2, or on only one of them. When stretching recess 15 is provided on both, those stretching recesses may be different in depth or width from each other.

Next, air vent pins (an example of the air vent part) to be provided in the resin-discharging-use molding space 33 in the first mold element 1 are described. The air vent pins 19 are provided so that gases contained in molten molding resin are let to efficiently escape outside from within the molding space 3.

According to that purpose, as shown in Fig. 6B, positions where the individual air vent pins 19 are provided are places where fore end portions of the molten molding resin 4 are finally filled, i.e., the resin-discharging-use molding space 33 that is located farthest from the gate portion 14.

However, in fact, it is more likely that gases which could slightly remain in the individual product molding spaces 31 matters rather than gases which concentrate to the resin-discharging-use molding space 33. Therefore, it is preferable that the air vent pins 19 are provided at places in the resin-discharging-use molding space 33 closer to the product molding spaces 31 in order to efficiently remove the gases that could slightly remain.

Thus, with the air vent pins 19 provided at places in the resin-discharging-use molding space 33 farthest from the gate portion 14 and adjacent to the product molding spaces 31, not only the gases converged to the resin-discharging-use molding space 33 but also gases slightly remaining in the individual product molding spaces 31 can be let to escape.

The shape, size and position of each air vent pin 19 as well as the width of its contact with the product molding spaces 31 is determined as required depending on the size and shape of each product molding space 31, the distance from the gate portion 14, the magnitude of flow resistance of the molding resin 4 attributed to depressions and projections of the metal mold for injection-molding with in-mold decoration (i.e., the first mold element 1 and the second mold element 2), and the like.

Also, the number of the air vent pins 19 to be provided is determined, as required with a view to smoother discharge of the gases, depending on the capacities of the molding space 3 and the individual product molding spaces 31 as well as on the rate at which the gases should be discharged.

Particularly with the injection-molding and in-mold decoration method, since the gases of the molding resin 4 less escapes from the second mold element 2 that is brought into contact with the decorating film 5 at its inner bottom surface of the recessed portion 22, it is useful to provide such individual air vent pins 19 and moreover molding resins 4 involving higher amounts of gases generation become also usable because the matter can be resolved as shown above.

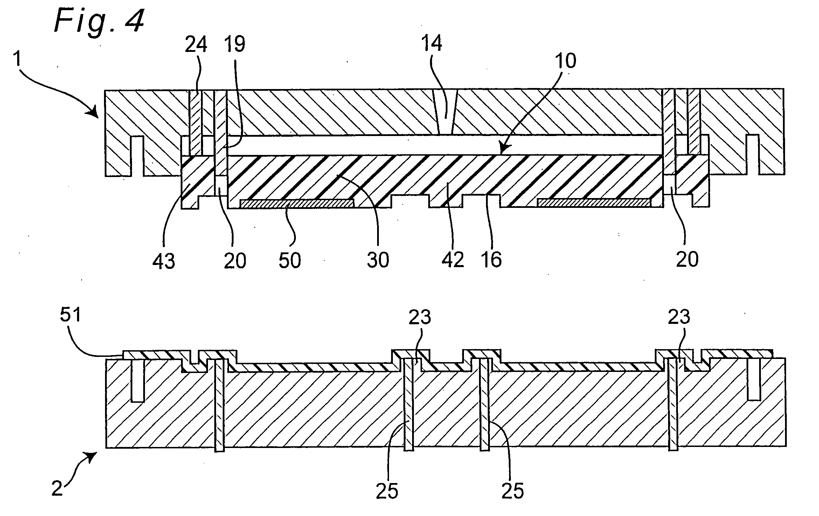

As shown in Fig. 4, the injection-molded and in-mold decorated article 10 formed by the resin filled into the molding space 3 is made up of product molded article portions 30, which are portions formed by resin filled in the product molding spaces 31, an injection-space molded article portion 42, which is a portion formed in the resin-injection-use molding space 32, and a discharge-space molded article portion 43, which is a portion formed in the resin-discharging-use molding space 33. It is noted that the injection-space molded article portion 42 and the discharge-space molded article portion 43 are placed and formed on the peripheries of the individual product molded article portions 30, these molded article portions can be said to be an outer-frame molded article portion 40 as a whole. In the molding of the injection-molded and in-mold decorated article 10 shown above, by the provision of the air vent pins 19, a plurality of air vent holes 20 are formed in the injection-molded and in-mold decorated article 10 as shown in Fig. 4. Such air vent holes 20 as shown above can also be used for positioning involved in cutting the injection-molded and in-mold decorated article 10 into the product molded article portions 30 and the outer-frame molded article portion 40 in later process after the injection molding.

Also, since the air vent holes 20 are formed in the discharge-space molded article portion 43, there can be obtained an advantage that the air vent holes 20 can be separated from the product molded article portions 30 as part of the outer-frame molded article portion 40, so that the product molded article portions 30 are not adversely affected.

The molding resin 4 may be given by using thermoplastic resins such as acrylic resin, polycarbonate resin, styrene resins, polyamide resins, NORYL resins, polyester resins, olefin resins, urethane resins, and on acrylonitrile butadiene styrene resins.

Further, as shown in Fig. 4, a plurality of ejector pins 24 for extruding the injection-molded and in-mold decorated article 10 formed in the molding space 3 so that the injection-molded and in-mold decorated article 10 is released from the recessed portion 12 of the first mold element 1 are provided in vicinities of peripheral portion of the inner bottom portion of the recessed portion 12 of the first mold element 1. In addition, instead of the case where the releasing is implemented by the individual ejector pins 24 as shown above, the air vent pins 19 may have the function of mold releasing operation.

Next, a method for manufacturing the injection-molded and in-mold decorated article 10 with the use of the first mold element 1, the second mold element 2 and the decorating film 5 of the above-described structures is described in detail.

First, as shown in Fig. 1, the first mold element 1 and the second mold element 2 are placed in opposition to each other so that their respective recessed portions 12, 22 confront each other (i.e., so that the recessed portion 22 of the second mold element 2 faces upward and the recessed portion 12 of the first mold element 1 faces downward as viewed in Fig. 1), and the decorating film 5 is placed between the first mold element 1 and the second mold element 2 so that the surface on which having decorating layers 50 provided thereon is placed on the first mold element 1 side. During this process, the molds 1, 2 are so positioned that the reference surface 11 of the first mold element 1 and the reference surface 21 of the second mold element 2 become coincident with each other via the decorating film 5, while the decorating film 5 is also positioned relative to the molds 1, 2 at the same time.

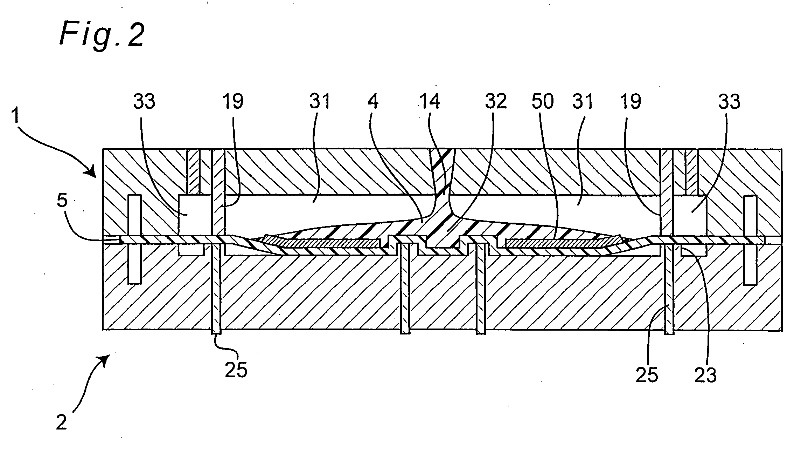

After this positioning, as shown in Fig. 2, the first mold element 1 and the second mold element 2 are clamped via the decorating film 5. As a result of this clamping, as shown in Figs. 9 and 10, a molding space 3, which includes individual product molding spaces 31, a resin-injection-use molding space 32 and resin-discharging-use molding space 33, is formed by the recessed portion 12 of the first mold element 1 and the decorating film 5. Also, in this clamping, as shown in Figs. 11A and 11B, when the engagement members 16 (not shown in Figs. 1 and 2) engaged with the stretching recesses 15 of the first mold element 1 is engaged with the stretching recess 15 of the second mold element 2 via the decorating film 5, tension is imparted to the decorating film 5, by which wrinkles, looseness and the like are removed.

Thereafter, as shown in Fig. 2, injection of molten molding resin 4 into the molding space 3 through the gate portion 14 is started. This injected molding resin 4 is injected first into the resin-injection-use molding space 32, pressing the decorating film 5 toward the second mold element 2 side, by which the pressed decorating film 5 is brought into contact with the partitioning protrusions 23 and moreover fixed by the suction pins 25. Thereafter, the molten molding resin 4 fills the resin-injection-use molding space 32 in vicinities of the gate portion 14 and moreover enters the individual product molding spaces 31 beyond the partitioning protrusions 23 on the vicinities side.

In this operation, the molten molding resin 4 increasingly fills the molding space 3 while pressing and gradually stretching the decorating film 5 with the partitioning protrusions 23, thus making the decorating film 5 less likely to loosen. Accordingly, small wrinkles less occurs to the decorating film 5 surrounded by the individual partitioning protrusions 23.

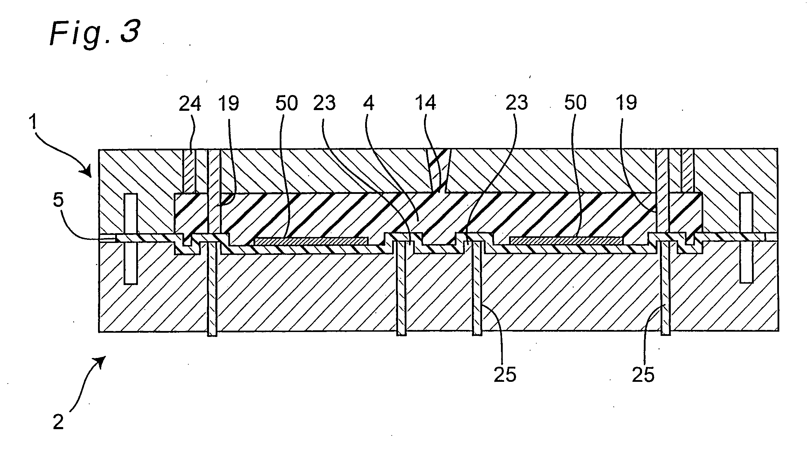

Then, after the molten molding resin 4 has filled the product molding spaces 31, or as this filling goes on, part of the molding resin 4 injected into the individual product molding spaces 31 enters into the resin-discharging-use molding space 33, so that the resin-discharging-use molding space 33 is filled with the molding resin 4. As a result of this, the molding space 3 is filled with the molding resin 4 (see Fig. 3). Also, in the process of such filling, most of the gases generated from the molding resin 4 is converged to the resin-discharging-use molding space 33, and further the gases converged by the air vent pins 19 is discharged to outside of the molding space 3. Further, by the individual air vent pins 19 being provided in the resin-discharging-use molding space 33 in the vicinities of the individual product molding spaces 31, gas that slightly remains in the product molding spaces 31 is also discharged outside and removed by those air vent pins 19.

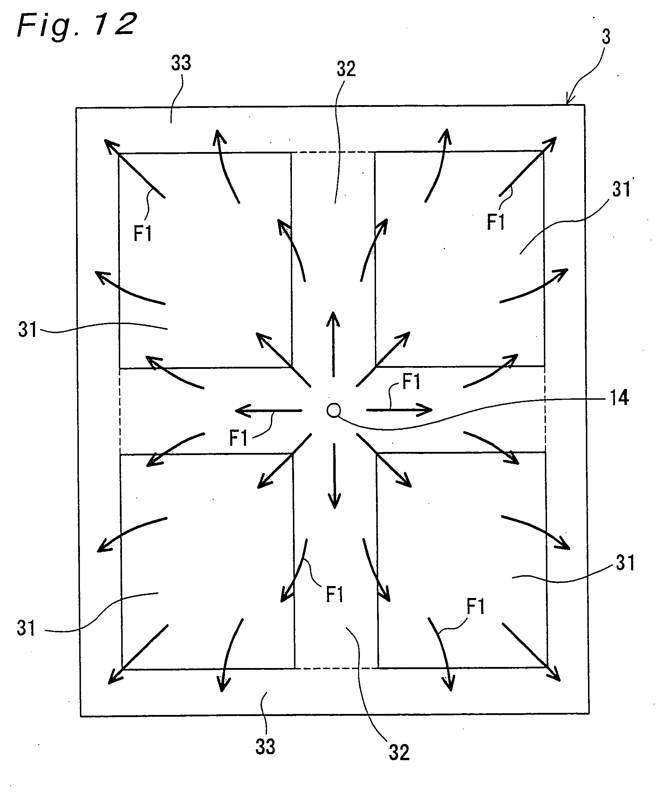

Now flows of molding resin 4 injected into the molding space 3 are visually shown in Fig. 12 by using a spatial arrangement view (schematic plan view) of the molding space 3. As shown in Fig. 12, the molten molding resin 4 injected through the gate portion 14 placed at a place near the generally center of the molding space 3 is first injected into the resin-injection-use molding space 32 directly communicating with the gate portion 14, and further the injected molding resin 4 is filled into the resin-injection-use molding space 32 in such flow directions F1 (arrows in the figure) as spreading generally radially from the gate portion 14. Along with the progress of this injection process, the molding resin 4 spreads in the generally radial flow directions F1, flowing from the resin-injection-use molding space 32 into the individual product molding spaces 31 so as to fill the product molding spaces 31. The molding resin 4 further spreading generally radially, part of the molding resin 4 injected into the product molding spaces 31 flows in so as to be discharged into the resin-discharging-use molding space 33, so that the molding resin 4 is filled into the overall molding space 3.

Since the molding resin 4 is injected so as to spread in the molding space 3 in such generally radial flow directions F1 as shown in Fig. 12, it becomes practicable to concentrate generated gases to the resin-discharging-use molding space 33, which is a space serving as terminal end portions of injection of the molding resin 4. Moreover, collisions of the injected molding resin 4 itself do not occur nowhere in the individual product molding spaces 31, so that occurrence of welds in the individual product molding spaces 31 can be prevented.

After the molding resin 4 has been filled into the molding space 3 in this way, the molding resin 4 that has been in the molten state is cooled and solidified. Thereafter, as shown in Fig. 4, as the clamping of the first mold element 1 and the second mold element 2 is released, the ejector pins 24 are projected, causing the injection-molded and in-mold decorated article 10 to be released from the mold. The decorating layers 50 of the decorating film 5 are peeled off from a substrate sheet 51 and resultantly fixed to the surface of the injection-molded and in-mold decorated article 10 that has been in contact with the decorating film 5. Thus, the decoration on the injection-molded and in-mold decorated article 10 has been achieved.

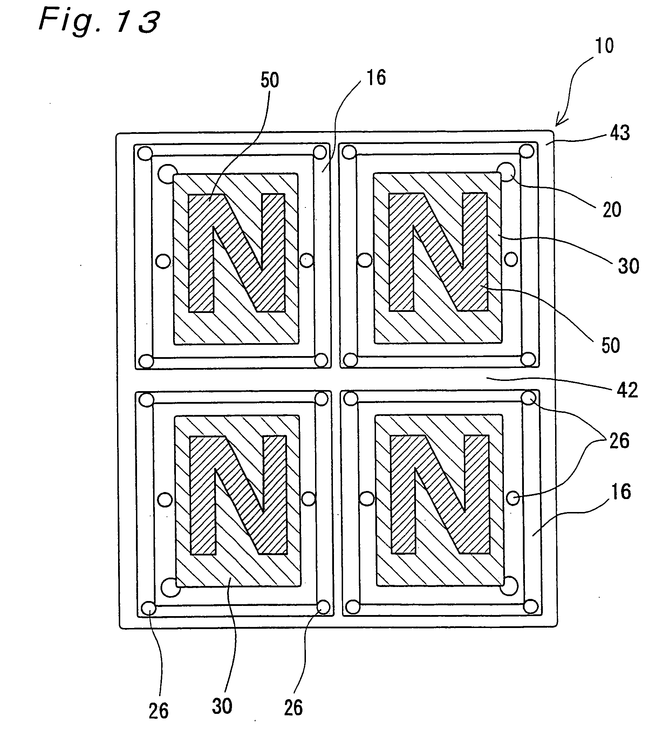

A schematic plan view of the injection-molded and in-mold decorated article 10 formed as shown above is shown in Fig. 13. As shown in Fig. 13, the injection-molded and in-mold decorated article 10 includes the individual product molded article portions 30, the injection-space molded article portion 42 and the discharge-space molded article portion 43, which are formed integrally. Also, the individual product molded article portions 30 have, on their surfaces, N-shaped patterns by the decorating layers 50. Further, partitioning recesses 16, which are traces of the partitioning protrusions 23 in the second mold element 2, are formed in the frame molded article portion 40 so as to surround the peripheries of the individual product molded article portions 30. A plurality of suction holes or suction protrusions 26, which are traces of the suction pins 25 in the second mold element 2 (depending on the configuration of the suction pins 25, the traces of the suction pins 25 may be either hole shaped or protrusion shaped), are formed on the individual partitioning recesses 16 or in their vicinities. Moreover, a plurality of air vent holes 20, which are traces of the air vent pins 19, are formed in the frame molded article portion 40. Therefore, none of the partitioning recesses 16, the suction holes or suction protrusions 26, and the air vent holes 20 are formed in the individual product molded article portions 30.

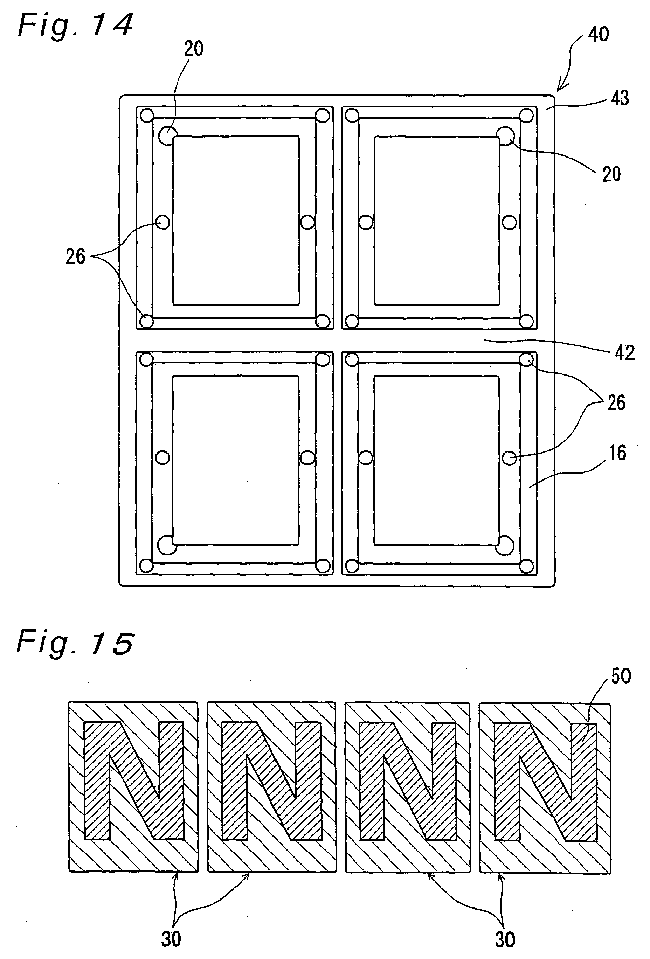

The injection-molded and in-mold decorated article 10 obtained in this way is, as shown in Figs. 14 and 15, cut from the injection-space molded article portion 42 and the discharge-space molded article portion 43 at boundary portions with the individual product molded article portions 30 by a specified size, thus being divided into four product molded article portions 30 (see Fig. 14) and a outer-frame molded article portion 40 (see Fig. 15), so that the individual product molded article portions 30, for example, are obtained as product portions. It is noted that the method of cutting may be implemented by cutting work, laser beam machining, Thomson machining, mold press working, chisel machining (including thermal process), radio frequency machining or the like. Besides, in Figs. 13, 14 and 15, hatching patterns are added in order to make it easier to recognize divisions of those molded article portions or the like.

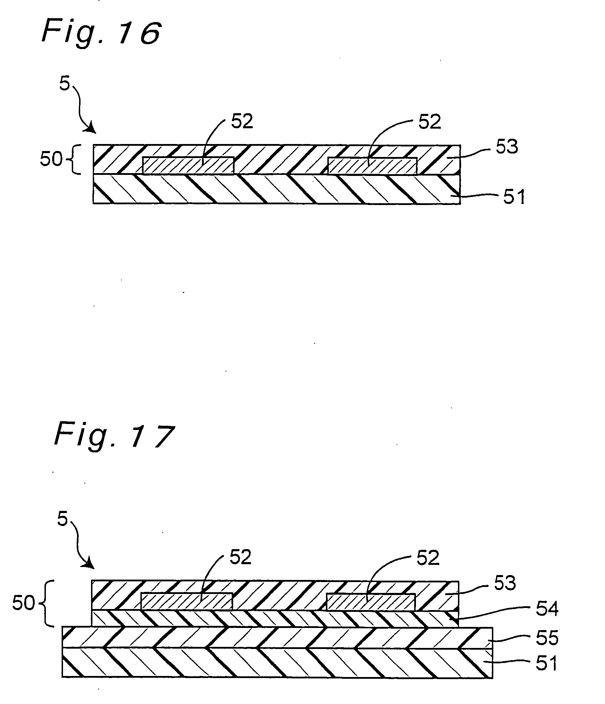

Next, the structure of the decorating film 5 to be used in this embodiment is explained. As shown in Fig. 16, the decorating film 5 is formed of the substrate sheet 51 and the decorating layer 50 provided on the substrate sheet 51, the decorating layer 50 includes a pattern layer 52 (a portion forming the N-shaped pattern), an adhesion layer 53 or the like.

The substrate sheet 51 may be a laminated film of a resin selected from among polycarbonate resin, polyamide resin, polyimide resin, polyester resin, acrylic resin, olefin resin, urethane resin, acrylonitrile butadiene styrene resin, and the like, or a laminated film or copolymerized film of two or more kinds selected from thereamong.

The thickness of the substrate sheet 51 is preferably 5 to 500 µm. The substrate sheet, if less than 5 µm in thickness, would be poor at handlability in the process of setting to the mold such as the placement and clamping between the molds 1, 2, making subsequent molding steps unstable. The substrate sheet 51 having a thickness beyond 500 µm would be so rigid that its adhesion to the partitioning protrusions 23 would deteriorate, causing in some cases wrinkle traces or the like of the decorating film 5 to occur to the surface of the injection-molded and in-mold decorated article 10.

On the substrate sheet 51, an easily adherable layer may be formed so that the decorating layer 50 firmly adheres thereto. Material of the easily adherable layer may be given by polyester resin, acrylic resin, olefin resin, urethane resin or the like. The method for providing the easily adherable layer may be a general printing process such as gravure printing, screen printing or offset printing, or otherwise any of various types of coating methods.

On the substrate sheet 51, a pattern layer 52 of characters, geometric patterns, strips of contact print or the like is formed. As the material of the pattern layer 52, usable are acrylic resin, soluble cotton resin, polyurethane resin, chlorinated rubber resin, vinyl chloride - vinyl acetate copolymer resin, polyamide resin, polyester resin, epoxy resin and the like, but this is not limitative.

The pattern layer 52 may include a metal film layer of aluminum, chrome, copper, nickel, indium, tin, silicon oxide or the like by vacuum deposition or plating or other process. In this case, the metal film layer may be either allover or patterned.

Film thickness of the pattern layer 52 is preferably 0.5 µm to 50 µm. Film thicknesses smaller than 0.5 µm would make it impossible to obtain enough design property, while film thicknesses larger than 50 µm would make it difficult to dry the pattern layer after the printing. However, in the case of a metal film layer, the film thickness is preferably 50Å to 1200Å. Film thicknesses of the metal film layer smaller than 50Å would make it impossible to obtain enough metal lustrousness, while film thicknesses larger than 1200Å would cause cracks to occur more easily.

The method for providing the pattern layer 52 overall or in patterns may be a general printing process such as gravure printing, screen printing or offset printing, or a metal film formation process such as Tampo-printing, coating, various coating processes, evaporation, ion plating or sputtering.

The adhesion layer 53 has a function of bonding the decorating film 5 and the molding resin 4 to each other. The material of the adhesion layer 53 may be given desirably by using acrylic resin, soluble cotton resin, polyurethane resin, chlorinated rubber resin, vinyl chloride - vinyl acetate copolymer resin, polyamide resin, polyester resin, epoxy resin, polycarbonate resin, olefin resin, acrylonitrile butadiene styrene resin, or the like.

The thickness of the adhesion layer 53 is preferably 0.5 to 50 µm. Film thicknesses smaller than 0.5 µm would make it impossible to obtain enough adhesion property, while film thicknesses larger than 50 µm would make it difficult to dry the adhesion layer after the printing. The method for forming the adhesion layer 53 may be a general printing process such as gravure printing, offset printing or screen printing, or any of coating, dipping, reverse coater or the like.

In addition, when only the decorating layer 50 in the decorating film 5 is bonded to the molding resin 4, a peel-off layer 54 may be provided between the substrate sheet 51 and the pattern layer 52 as shown in Fig. 17. Otherwise, the substrate sheet 51 may be provided with a mold release layer 55 so as to be a substrate sheet having mold releasability.

The material of the peel-off layer 54 may be given by using acrylic resin, soluble cotton resin, polyurethane resin, chlorinated rubber resin, vinyl chloride - vinyl acetate copolymer resin, polyamide resin, polyester resin, epoxy resin, polycarbonate resin, olefin resin, acrylonitrile butadiene styrene resin, or the like.

The thickness of the peel-off layer 54 is preferably 0.5 to 50 µm. Film thicknesses smaller than 0.5 µm would make it impossible to obtain enough adhesion property, while film thicknesses larger than 50 µm would make it difficult to dry the peel-off layer after the printing, disadvantageously. The method for forming the mold release layer 55 may be a general printing process such as gravure printing, offset printing or screen printing, or any of coating, dipping, reverse coater or the like.

The material of the mold release layer 55 may be given desirably by using acrylic resin, soluble cotton resin, polyurethane resin, chlorinated rubber resin, vinyl chloride - vinyl acetate copolymer resin, polyamide resin, polyester resin, epoxy resin, polycarbonate resin, olefin resin, acrylonitrile butadiene styrene resin, or the like.

The thickness of the mold release layer 55 is preferably 0.5 to 50 µm. Film thicknesses smaller than 0.5 µm would make it impossible to obtain enough adhesion property, while film thicknesses larger than 50 µm would make it difficult to dry the mold release layer after the printing, disadvantageously. The method for forming the mold release layer 55 may be a general printing process such as gravure printing, offset printing or screen printing, or any of coating, dipping, reverse coater or the like.

In addition, in the decorating film 5 of such a structure as shown in Fig. 16, it is desirable that the substrate sheet 51 or the adhesion layer 53 be transparent or semitransparent to form specified patterns by the pattern layers 52. Also, in the decorating film 5 of such a structure as shown in Fig. 17, it is preferable that the peel-off layer 54 or the adhesion layer 53 be transparent or semitransparent.

### (Second Embodiment)

It is noted here that the present invention is not limited to the foregoing embodiment but may be embodied in other various modes. For example, the manufacturing method for injection-molded and in-mold decorated articles according to a second embodiment of the invention can be said to be generally similar in constitution to the method of the first embodiment in terms of using a first mold element and a second mold element as well as a decorating film, but differs therefrom in that the first mold element and the second mold element are placed in opposition to each other with the decorating film interposed therebetween, in which state, without performing the clamping and with the molds opened, injection of the molding resin is performed. That is, this second embodiment adopts a so-called compression-method injection molding (injection compression molding) that in a state that the molding space formed between the first mold element and the decorating film is open (i.e., in an open-space state), the injection of molding resin is performed, and thereafter those molds are clamped, by which the molding resin filled in the molding space is compressed by reducing the capacity of the molding space. In this point, the method of the second embodiment differs from that of the first embodiment that adopts an injection molding in which molding resin is injected into the closed molding space and thereafter injection molding is performed without being accompanied by any reduction change of the capacity of the molding space. Hereinbelow, the description will be given mainly on this difference point, while the description of the first embodiment should be referred to for the same components as in the first embodiment. In addition, with regard to the structures of the molds and the decorating film in the second embodiment, structural components similar to those of the first embodiment are designated by the same reference numerals as in the first embodiment for an easier understanding of those structures.

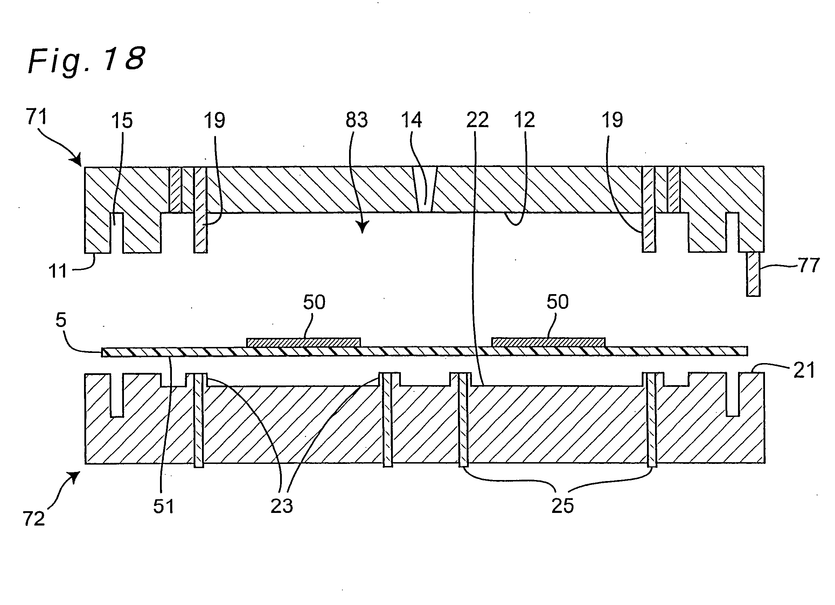

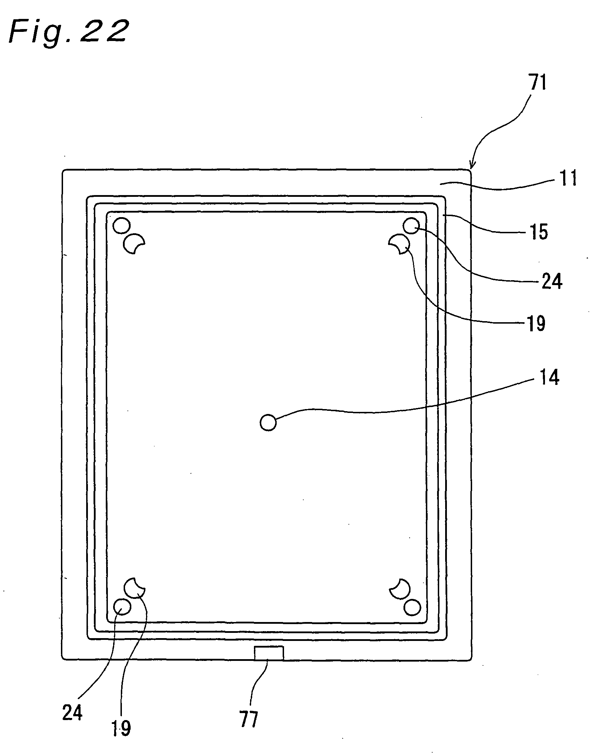

First, as schematic explanatory views schematically showing a manufacturing method for injection-molded and in-mold decorated articles according to this second embodiment, schematic sectional views of a first mold element and a second mold element are shown in Figs. 18, 19, 20 and 21. Also, a schematic plan view of the first mold element is shown in Fig. 22.

The first mold element 71, as shown in Fig. 22, has a generally quadrilateral, flat shape, as the first mold element 1 of the first embodiment, and at its four peripheral end portions, a reference surface 11 which makes direct contact with the second mold element 72. In an inner portion surrounded by the reference surface 11 are formed a recessed portion 12 having a configuration corresponding to the external shape of the resin molded article, a mold touch sensor 77, and a stretching recess 15. The mold touch sensor 77 is a sensor for, before the first mold element 71 and the second mold element 72 placed in opposition to each other are completely clamped, making contact with a recessed surface 21 of the second mold element 72 to provide a mold-touch state, and injecting molding resin 4 while maintaining the gap distance between the first mold element 71 and the second mold element 72 at a specified length. In addition, although the second embodiment is described on a case where the mold touch sensor 77 is provided on the first mold element 71, yet the mold touch sensor 77 may also be provided on the second mold element 72. Otherwise, the first mold element 71 and the second mold element 72 are similar in structure to the first mold element 1 and the second mold element 2 of the first embodiment.

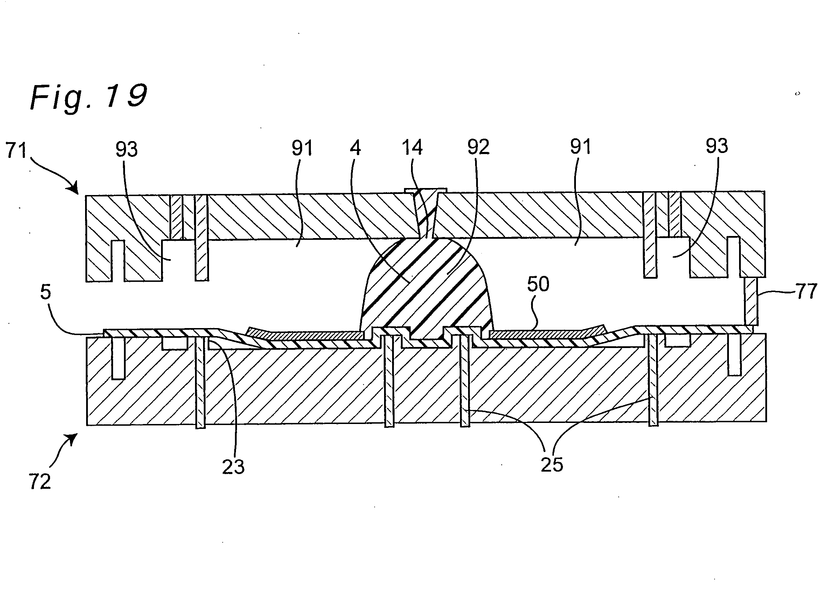

As a result of the placement of the first mold element 71 and the second mold element 72 having the structure shown above and placed in opposition to each other with the decorating film 5 interposed therebetween, as shown in Fig. 19, a molding space 83 can be formed as in the first embodiment. This molding space 83, as in the first embodiment, includes product molding spaces 91, a resin-injection-use molding space 92 and a resin-discharging-use molding space 93, the planar arrangement of these molding spaces being also similar to that of the first embodiment.

A method for manufacturing an injection-molded and in-mold decorated article 80 by using the first mold element 71, the second mold element 72 and the decorating film 5 of the structure shown above is described in detail below.

First, as shown in Fig. 18, the first mold element 71 and the second mold element 72 having structures shown above are placed in opposition to each other so that their respective recessed portions 12, 22 confront each other, and the decorating film 5 is placed between the first mold element 71 and the second mold element 72 so that the surface on which the decorating layer 50 is provided is positioned on the first mold element 71 side. In this process, positioning of the reference surfaces 11, 21 as well as positioning of the decorating film 5 are fulfilled concurrently.

After this positioning, as shown in Fig. 19, the first mold element 71 and the second mold element 72 are made to approach each other, so that a fore end of the mold touch sensor 77 provided on the reference surface 11 of the first mold element 71 is brought into contact with the reference surface 21 of the second mold element 72 directly or via the decorating film 5. As this contact is detected by an unshown control unit, the approach is stopped so that a specified distance is held between the first mold element 71 and the second mold element 72.

In this holding state, as shown in Fig. 19, injection of molten molding resin 4 into the molding space 83 that have been maintained open is started. The molding resin 4 injected through the gate portion 14 is injected first into the resin-injection-use molding space 92, pressing the decorating film 5 toward the second mold element 72 side, by which the pressed decorating film 5 is brought into contact with the partitioning protrusions 23 and moreover fixed by the suction pins 25. Thereafter, through clamping, the molten molding resin 4 fills the resin-injection-use molding space 92 in vicinities of the gate portion 14 and moreover enters the individual product molding spaces 91 beyond the partitioning protrusions 23 on the vicinities side.

In this operation, the molten molding resin 4 increasingly fills the molding space 83 while pressing and gradually stretching the decorating film 5 with the partitioning protrusions 23, thus making the decorating film 5 less likely to loosen. Accordingly, small wrinkles less occur to the decorating film 5 surrounded by the individual partitioning protrusions 23.

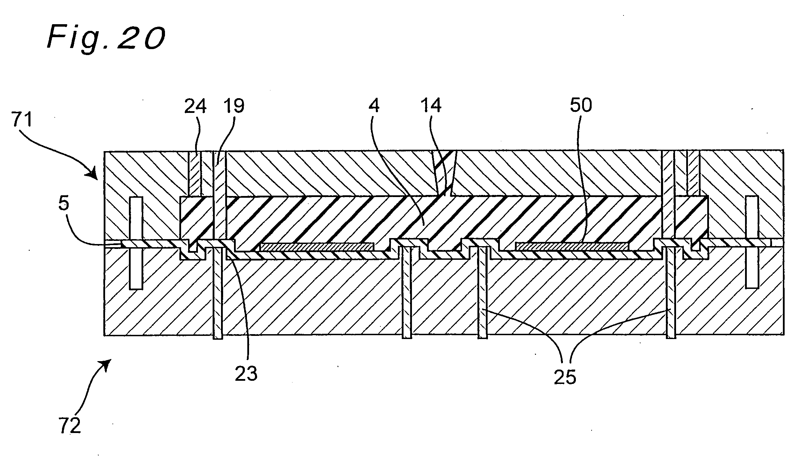

Then, after the molten molding resin 4 has filled the product molding spaces 81, or as this filling goes on, as shown in Fig. 20, part of the molding resin 4 filled into the product molding spaces 91 enters into the resin-discharging-use molding space 93, so that the overall molding space 83 is filled with the molding resin 4. As this filling goes on, the first mold element 71 and the second mold element 72 with their specified distance maintained are made to further approach each other so that the reference surface 11 of the first mold element 71 and the reference surface 21 of the second mold element 72 are brought into contact with each other via the decorating film 5. As a result of this, the capacity of the molding space 83 with the molding resin 4 filled therein is reduced and moreover the molding space 83 is changed from open to close state. Thus, the molding resin 4 filled in the molding space 83 is compressed so as to be filled allover to every corner of the molding space 83, and moreover the molding resin 4 is compacted to higher density. Also, in the process of such filling, most of the gases generated from the molding resin 4 are converged to the resin-discharging-use molding space 93. Also, in cases where occurrence of welds is involved, sites of occurrence of welds are shifted into the resin-discharging-use molding space 93. In addition, flow directions of the molding resin 4 filled into the molding space 83 in the process of filling of the molding resin 4 are similar to the flow directions F1 described in the first embodiment (see Fig. 12).

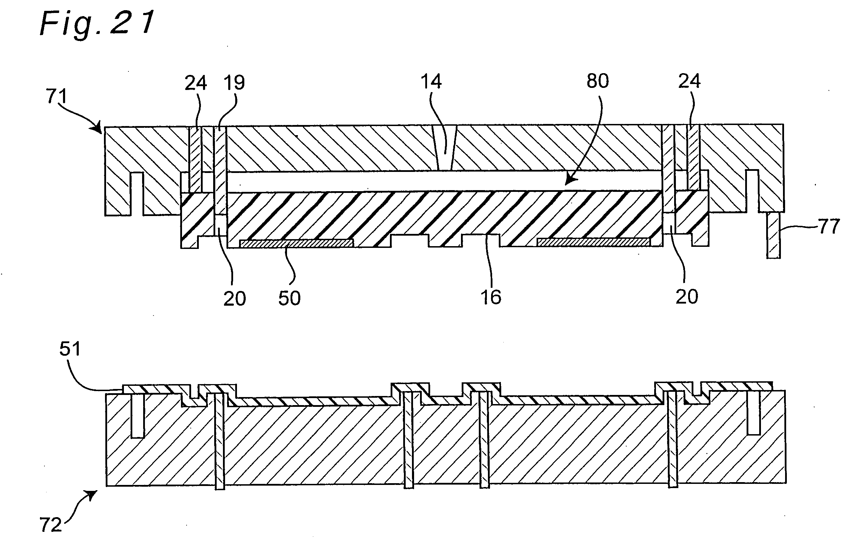

After the molding resin has been filled into the molding space 83 in this way, the molding resin 4 that has been in the molten state is cooled and solidified. Thereafter, as shown in Fig. 21, as the clamping of the first mold element 71 and the second mold element 72 is released, the ejector pins 24 are projected, causing the injection-molded and in-mold decorated article 80 to be released from the mold. The decorating layers 50 of the decorating film 5 are peeled off from the substrate sheet 51 and resultantly fixed to the surface of the injection-molded and in-mold decorated article 80 that has been in contact with the decorating film 5. Thus, the decoration on the injection-molded and in-mold decorated article 80 has been achieved.

Thereafter, the injection-molded and in-mold decorated article 80 is cut into the product molded article portions and the outer-frame molded article potions, by which the product molded article portions are obtained, respectively, as in the first embodiment.

According to the second embodiment, in the process of injection of the molding resin 4 into the molding space 83, the molding space 83 is set to an open state, and after the filling of the molding resin 4, the first mold element 71 and the second mold element 72 that have been in the open state are clamped, by which the molding space 83 is put into a hermetically closed state and moreover the capacity of the molding space 83 is reduced. As a result of this, the filled molding resin 4 can be compressed so as to extend allover to every corner of the molding space 83. Such an effect becomes greater particularly in cases where the molding space 83 is a thin-type space so that an even-state injection of the molding resin 4 is difficult to achieve. Also, since the molding resin 4 can be compressed, it becomes practicable to form high-density molded articles, so that this method is suitable as a manufacturing method in cases where the injection-molded and in-mold decorated article 80 is an optical lens or other optical system component or the like.

Besides, although this second embodiment has been described on a case of an injection compression molding in which with the first mold element 71 and the second mold element 72 maintained at specified distance therebetween and with the molding space 83 in an open state, the injection of the molding resin 4 is performed and thereafter the first mold element 71 and the second mold element 72 are clamped so that the capacity of the molding space 83 is reduced and moreover hermetically closed, yet the injection compression molding is not limited to such a case only. Instead of such a case, it is also possible that, for example, with the first mold element provided so as to be partly movable, the first mold element and the second mold element are clamped to form a hermetically closed molding space, thereafter the injection of molding resin is performed, and then the part of the first mold element is moved, by which the capacity of the molding space is reduced to compress the filled molding resin.

### (Working Examples of Molding Space)

Next, various working examples of the arrangement of the molding space defined by the first mold element and the decorating film, which has been described in the individual embodiments of the present invention, are described with reference to spatial arrangement views.

### (Working Example 1)

The foregoing embodiments have been described on a case where the molding space 3 has the four product molding spaces 31, the resin-injection-use molding space 32 and the resin-discharging-use molding space 33. However, the invention is not limited to such cases where a plurality of product molding spaces are included and moreover the resin-injection-use molding space is further included, but various aspects are conceivable.

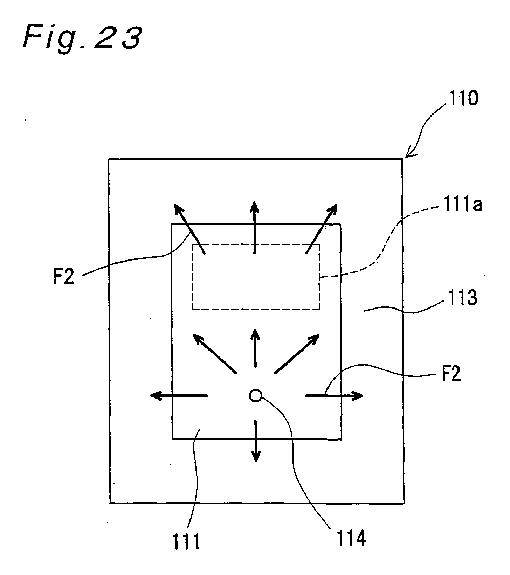

Now a spatial arrangement view (schematic plan view) of a molding space 110 according to Working Example 1 is shown in Fig. 23. As shown in Fig. 23, the molding space 110 has one product molding space 111 and a resin-discharging-use molding space 113. More specifically, the product molding space 111 is a space having a generally square shape, as viewed in a plan view, and the resin-discharging-use molding space 113 is placed so as to surround the entire outer periphery of the product molding space 111. Further, a gate portion 114 is placed at a place near a lower center of the product molding space 111 as viewed in the figure.

By such makeup of the molding space 110, molding resin injected into the product molding space 111 through the gate portion 14 is filled into the product molding space 111 while spreading generally radially from the gate portion 14. It is noted that flow directions F2 of the molding resin are shown by arrows in Fig. 23. Along with this filling, part of the molding resin filled into the product molding space 111 flows into the adjacently placed resin-discharging-use molding space 113, so that the molding resin is filled into the overall molding space 110.

In the molding space 110 of such a constitution, generated gases can be concentrated to the resin-discharging-use molding space 113 while the molding resin is being spread radially, and besides there never occurs any weld within the product molding space 111. However, since the gate portion 114 is placed in the product molding space 111, there remains a mark of the gate portion 114 in the surface of the formed molded article. For this reason, the placement of the gate portion 114 within the product molding space 111 needs to be determined in consideration of the presence of such a mark. For instance, as shown in Fig. 23, in a case where a portion where the mark should not be formed in the molded article, e.g., a transparent window portion 111a for visual recognition is formed at an upper place in the figure within the product molding space 111, the gate portion 114 may well be placed at a lower place in the figure so as to avoid the transparent window portion 111a.

According to this Working Example 1, the molding space 110 can be effectively utilized to the extent that the resin-injection-use molding space is not provided, allowing the metal mold for injection-molding with in-mold decoration to be reduced in size.

### (Working Example 2)

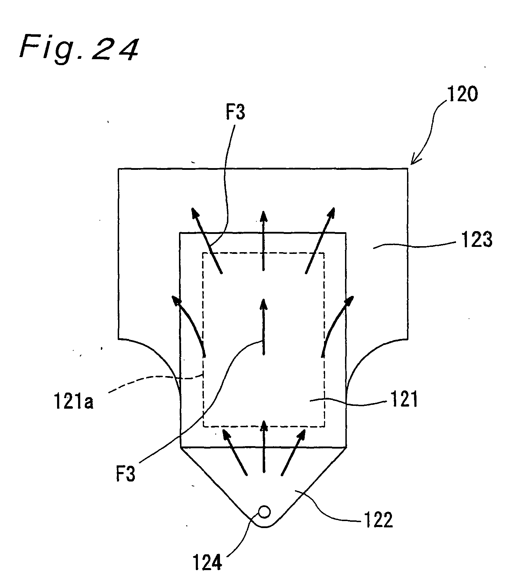

Next, a spatial arrangement view (schematic plan view) of a molding space 120 according to Working Example 2 is shown in Fig. 24. As shown in Fig. 24, the molding space 120 has one product molding space 121, a resin-injection-use molding space 122, and a resin-discharging-use molding space 123. More specifically, the resin-injection-use molding space 122 having a generally triangular spatial shape, as viewed in a plan view, is placed so as to be adjacent to and communicative with a lower-in-the-figure end portion of the product molding space 121, which is a space generally square shaped, as viewed in a plan view. Also, the resin-discharging-use molding space 123 is placed so as to be adjacent to and communicative with the remaining three-side end portions of the product molding space 121. Moreover, the gate portion 124 is placed near a lower place of the resin-injection-use molding space 122 as viewed in the figure.

By such makeup of the molding space 120, molding resin injected into the resin-injection-use molding space 122 through the gate portion 124 is filled into the resin-injection-use molding space 122 while spreading generally radially from the gate portion 124 toward the product molding space 121, as shown by flow directions F3 of the molding resin in Fig. 24. Further, the molding resin filled into the resin-injection-use molding space 122 flows into the product molding space 121, being filled into the product molding space 121. Thereafter, part of the filled molding resin flows from the product molding space 121 into the resin-discharging-use molding space 123, by which the molding resin is filled in the overall molding space 120.

According to this Working Example 2, in the molding space 120, generated gases can be concentrated to the resin-discharging-use molding space 123 while the molding resin is being spread radially, and besides there never occurs any weld within the product molding space 121. Further, since the gate portion 124 is placed in the resin-injection-use molding space 122, the product molding space 121, on which the decoration is to be applied, can be placed apart from the product molding space 121, thus suppressing breakage (e.g., ink flow) of the decorating layer due to the injection of high-pressure molding resin performed through the gate portion 124, so that reliable decoration can be fulfilled. Furthermore, since there never occurs any mark of the gate portion 124 on the surface of the molded article formed within the product molding space 121, for example, a transparent window portion 121a for visual recognition can be formed so as to occupy a generally entirety of the molded article formed by the product molding space 121.

### (Working Example 3)

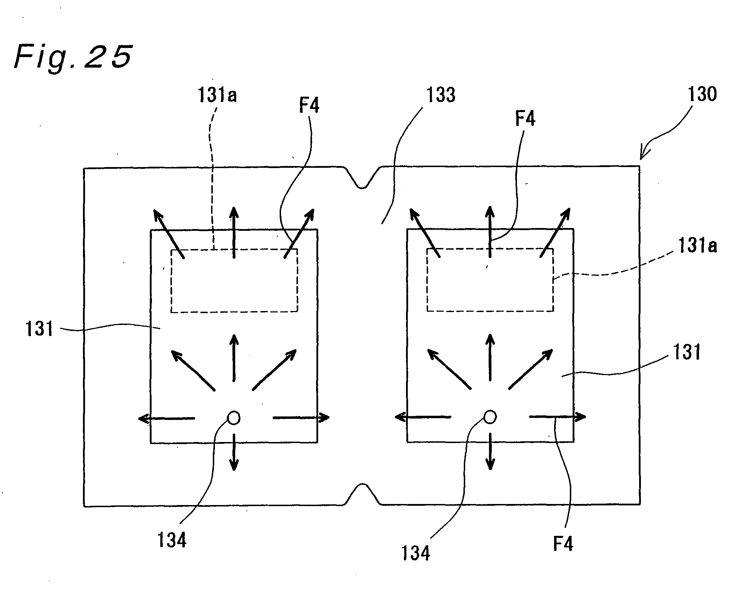

Next, a spatial arrangement view of a molding space 130 according to Working Example 3 is shown in Fig. 25. As shown in Fig. 25, the molding space 130 of this Working Example 3, which has such an arrangement as juxtaposition of two molding spaces 110 of Working Example 1, includes two product molding spaces 131 and resin-discharging-use molding spaces 133 which are so placed as to surround the product molding spaces 131, respectively, integrally in communication therewith. Further, a gate portion 134 is placed at a place near a lower center of each product molding space 131 as viewed in the figure.

By such makeup of the molding space 130, molding resin injected into the product molding spaces 131 through the gate portions 134, respectively, is filled into the individual product molding spaces 131 while spreading generally radially from the gate portions 134 (see flow directions F4 of the molding resin shown in Fig. 25). Along with this filling, part of the molding resin filled into the individual product molding spaces 131 flows into the resin-discharging-use molding spaces 133 that is adjacently placed so as to surround those resin-discharging-use molding spaces, being filled into the overall molding space 130.

According to this Working Example 3, effects similar to those of Working Example 1 can be obtained, and the molding space 130 can be effectively utilized to the extent that the resin-injection-use molding space is not provided, allowing the metal mold to be reduced in size. Preferably, the placement of the gate portions 134 in the product molding spaces 131, respectively, is determined in consideration of the placement of respective transparent window portions 131a for visual recognition, and moreover with the placement of the gate portions 134 left-right symmetrical, fore end portions of the molding resin injected through those gate portions 134 are positioned at the resin-discharging-use molding spaces 133 placed between the product molding spaces 131.

### (Working Example 4)

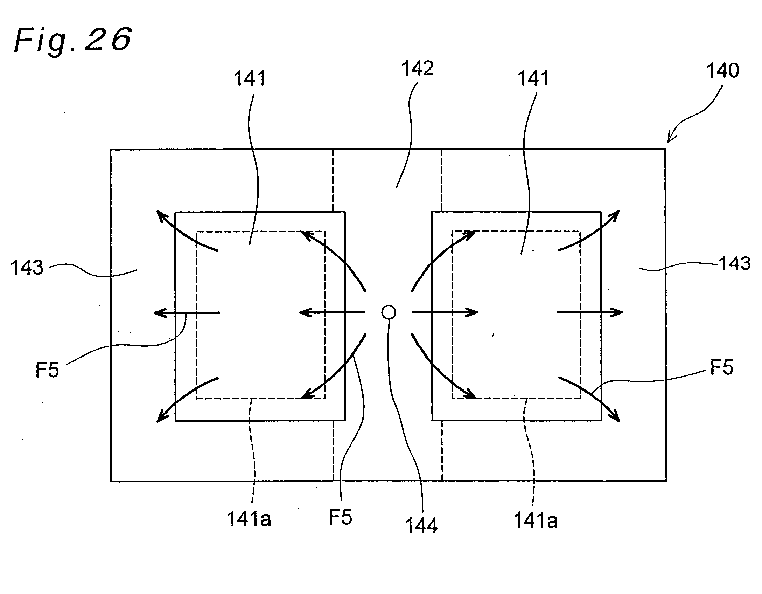

Next, a spatial arrangement view of a molding space 140 according to Working Example 4 is shown in Fig. 26. As shown in Fig. 26, the molding space 140 has juxtaposed two product molding spaces 141, a resin-injection-use molding space 142 which is placed between the product molding spaces 141 and which is adjacent to and communicative with the individual product molding spaces 141, and two resin-discharging-use molding spaces 143 which are placed adjacent to and communicative with the individual product molding spaces 141 so as to surround peripheries of the product molding spaces 141, except portions where the resin-injection-use molding space 142 is provided. Further, a gate portion 144 is placed at a place near a generally center of the resin-injection-use molding space 142.

By such makeup of the molding space 140, molding resin injected into the resin-injection-use molding space 142 through the gate portion 144, is filled into the resin-injection-use molding space 142 while spreading generally radially from the gate portion 144. Further, the molding resin filled in the resin-injection-use molding space 142 flows into the individual product molding spaces 141, being filled into the individual product molding spaces 141. Thereafter, part of the filled molding resin flows from the product molding spaces 141 into the resin-discharging-use molding spaces 143, respectively, by which the molding resin is filled in the overall molding space 140 (see flow directions F5 of the molding resin shown in Fig. 26).

According to this Working Example 4, effects similar to those of Working Example 2 can be obtained, and it is also made possible that while the product molding spaces 141 are provided two in number, only one gate portion 144 is provided only one, thus making possible to simplify the sprue runner, which is the injection path for the molding resin to the gate portion 144. As a result of this, the amount of the molding resin that remains in the sprue runner can be reduced. Also, since there never remains any mark of the gate portion 144 in the surfaces of the molded articles formed in the individual product molding spaces 141, for example, transparent window portions 141a for visual recognition can be formed so as to occupy generally entireties of the molded articles formed by the product molding spaces 141, respectively.

### (Working Example 5)

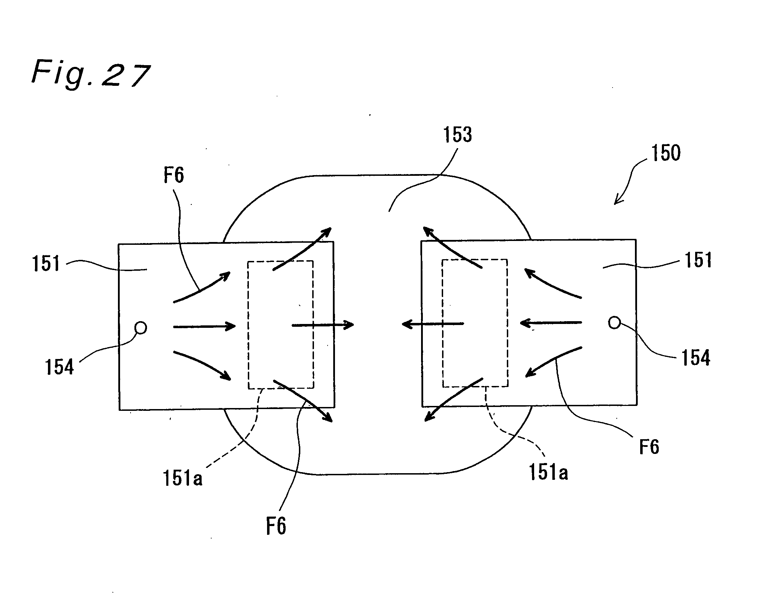

Next, a spatial arrangement view of a molding space 150 according to Working Example 5 is shown in Fig. 27. As shown in Fig. 27, the molding space 150 of this Working Example 5 includes juxtaposed two product molding spaces 151, and a resin-discharging-use molding space 153 which is so placed as to partly surround outer peripheries of the individual product molding spaces 151 and to be adjacent to and communicative therewith in a range between the individual product molding spaces 151 and in their vicinities. Further, a gate portion 154 is placed near a leftward center of the left-hand product molding space 151, and a gate portion 154 is placed near a rightward center of the right-hand product molding space 151, as viewed in the figure.

By such makeup of the molding space 150, molding resin injected into the product molding spaces 151 through the gate portions 154, respectively, is filled into the individual product molding spaces 131 while spreading generally radially from the individual gate portions 154 toward the center of the molding space 150, being filled into the individual product molding spaces 151. Along with this filling, part of the molding resin filled into the individual product molding spaces 151 flows into the adjacently placed resin-discharging-use molding space 153, by which the molding resin is filled into the overall molding space 150 (see flow directions F6 of the molding resin shown in Fig. 27).

According to this Working Example 5, effects similar to those of Working Examples 1 and 3 can be obtained, and the molding space 150 can be effectively utilized to the extent that the resin-injection-use molding space is not provided, allowing the metal mold to be reduced in size. Preferably, the placement of the gate portions 154 in the product molding spaces 151, respectively, is determined in consideration of the placement of respective transparent window portions 151a for visual recognition.

### (Working Example 6)

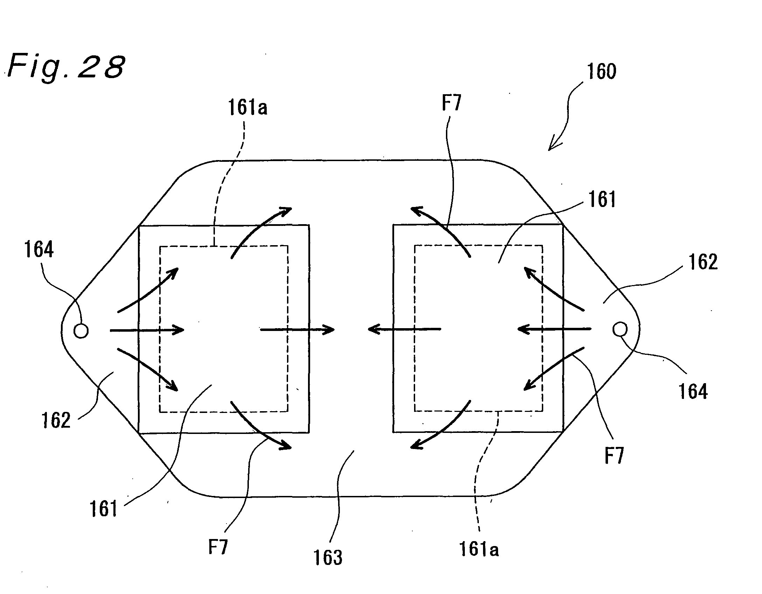

Next, a spatial arrangement view of a molding space 160 according to Working Example 6 is shown in Fig. 28. As shown in Fig. 28, the molding space 160, which has an arrangement that two molding spaces 120 of Working Example 2 are juxtaposed and opposed to each other, includes two product molding spaces 161, two resin-injection-use molding spaces 162 adjacent to and communicative with the product molding spaces 161, respectively, and a resin-discharging-use molding space 163 which is placed between the individual product molding spaces 161 so as to partly surrounds the individual product molding spaces 161 and which is integrally formed adjacent to and communicative with the product molding spaces 161. Further, gate portions 164 are provided in the resin-injection-use molding spaces 162, respectively.

By such makeup of the molding space 160, molding resin injected into the individual resin-injection-use molding spaces 162 through the gate portions 164, respectively, is filled into the individual resin-injection-use molding spaces 162 while spreading generally radially from the individual gate portions 164 toward then adjacent product molding spaces 161, being filled into the individual resin-injection-use molding spaces 162. Further, the molding resin filled into the individual resin-injection-use molding spaces 162 flows into their adjacent product molding spaces 161, respectively, being filled into the individual product molding spaces 161. Thereafter, part of the filled molding resin flows from the individual product molding spaces 161 into the resin-discharging-use molding space 163, by which the molding resin is filled into the overall molding space 160 (see flow directions F7 of the molding resin shown in Fig. 28).

According to this Working Example 6, even if two product molding spaces are provided, effects similar to those of Working Example 2 can be obtained. Also, since there never occurs any mark of the gate portions 164 on the surface of the molded article formed within the product molding space 161, for example, a transparent window portion 161a for visual recognition can be formed so as to occupy a generally entirety of the molded article formed by the product molding space 161.

### (Working Example 7)

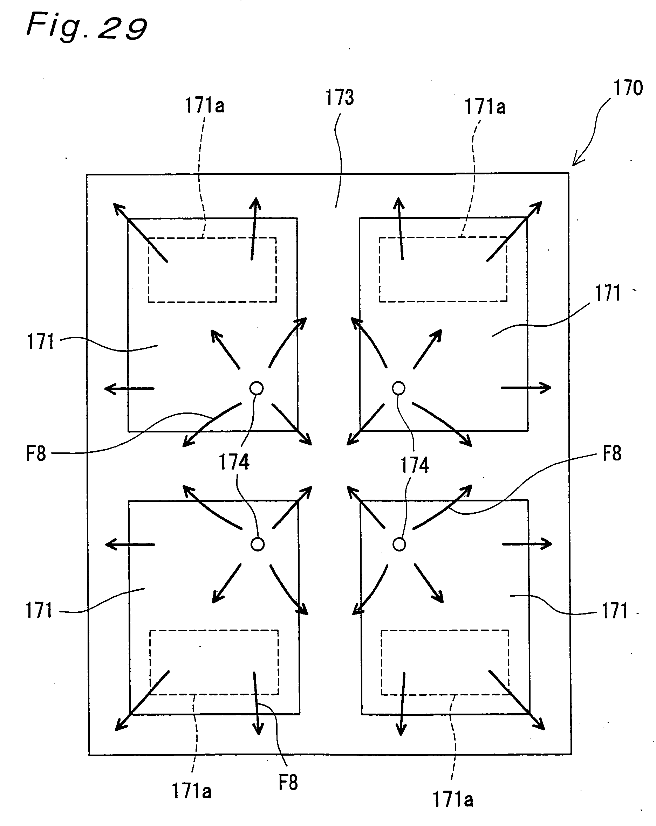

Next, a spatial arrangement view of a molding space 170 according to Working Example 7 is shown in Fig. 29. As shown in Fig. 29, the molding space 170 of this Working Example 7, which has an arrangement that the molding space 110 of Working Example 1 is arrayed and placed four in number around the center of the molding space 170, includes four product molding spaces 171, and a resin-discharging-use molding space 173 which is placed integrally communicatively so as to surround entire peripheries of the individual product molding spaces 171. Further, gate portions 174 are provided at places in the individual product molding spaces 171 near the center of the molding space 170, respectively.

By such makeup of the molding space 170, molding resin injected into the individual product molding spaces 171 through the gate portions 174, respectively, is filled into the individual product molding spaces 171 while spreading generally radially from the individual gate portions 174. Along with this filling, part of the molding resin filled into the individual product molding spaces 171 flows into the resin-discharging-use molding space 173 that is adjacently placed so as to surround the product molding spaces 171, by which the molding resin is filled into the overall molding space 170 (see flow directions F8 of the molding resin shown in Fig. 29).

According to this Working Example 7, even if a plurality of product molding spaces 171 are included provided, effects similar to those of Working Example 1 can be obtained, and moreover the molding space 170 can be effectively utilized to the extent that the resin-injection-use molding space is not provided, allowing the metal mold to be reduced in size. Preferably, the placement of the gate portions 174 in the individual product molding spaces 171, respectively, is determined so as to be centrosymmetrical with a reference position given by the center of the molding space 170, in consideration of the placement of respective transparent window portions 171a for visual recognition.

### (Working Example 8)

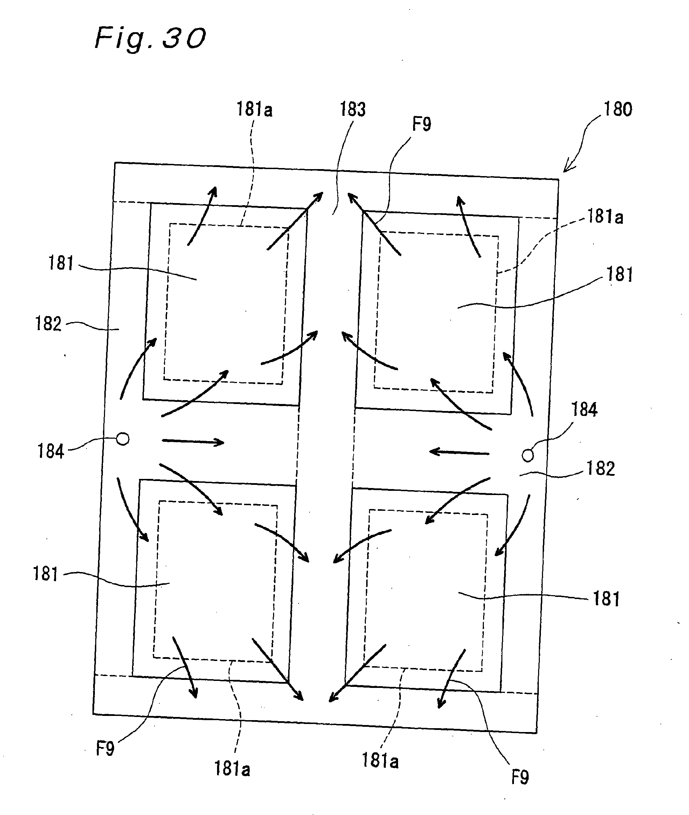

Next, a spatial arrangement view of a molding space 180 according to Working Example 8 is shown in Fig. 30. As shown in Fig. 30, the molding space 180 is obtained by applying the arrangement of the molding space 140 of Working Example 4 to a case where four product molding spaces 181 are provided. That is, the molding space 180 includes four product molding spaces 181 which are arrayed and placed around the center of the molding space 180, a resin-injection-use molding space 182 having a space which is formed between two product molding spaces 181 placed in the right hand in the figure and which is adjacent to and communicative with the right side thereof and a space which is placed symmetrical with the two product molding spaces 181 placed on the left side in the figure, and a resin-discharging-use molding space 183 which is integrally placed between and above and below right and left arrays of the product molding spaces 181 so as to be adjacent to and communicative therewith. Further, gate portions 184 are provided at a place near a right-side generally center of the right-hand placed resin-injection-use molding space 182, and a place near a left-side generally center of the left-hand placed resin-injection-use molding space 182, respectively, as viewed in the figure.

By such makeup of the molding space 180, molding resin injected into the individual resin-injection-use molding spaces 182 through the gate portions 184, respectively, is filled into the individual resin-injection-use molding spaces 182 while spreading generally radially from the gate portions 184. Further, the molding resin filled into the individual resin-injection-use molding spaces 182 flows into the individual product molding spaces 181, respectively, being filled into the individual product molding spaces 181. Thereafter, part of the filled molding resin flows from the individual product molding spaces 181 into the resin-discharging-use molding space 183, by which the molding resin is filled into the overall molding space 180 (see flow directions F9 of the molding resin shown in Fig. 30).

According to this Working Example 8, effects similar to those of Working Example 4 can be obtained. Also, since there never occurs any mark of the gate portions 184 on the surfaces of the molded articles formed within the individual product molding spaces 181, for example, transparent window portions 181a for visual recognition can be formed so as to occupy generally entireties of the molded articles formed by the individual product molding spaces 181, respectively.

### (Working Example 9)

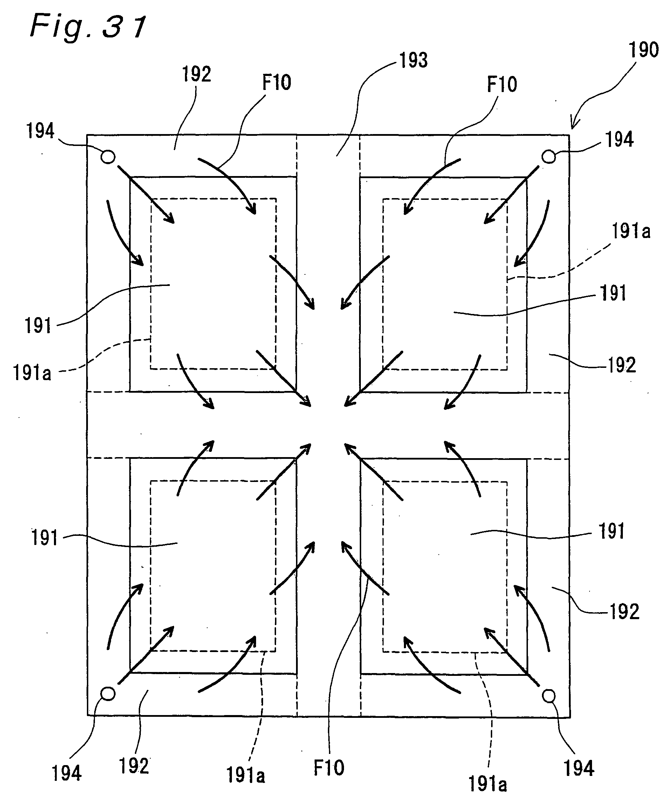

Next, a spatial arrangement view of a molding space 190 according to Working Example 9 is shown in Fig. 31. As shown in Fig. 31, the molding space 190 is a modification of the arrangement of the molding space 180 of Working Example 8. More specifically, resin-injection-use molding spaces 192 are provided in correspondence to the four product molding spaces 191, respectively. Also, a resin-discharging-use molding space 193 is formed as a generally cross shaped so as to be placed between the individual product molding spaces 191. Further, gate portions 194 are placed in the individual resin-injection-use molding spaces 192, respectively, so as to be positioned near four corner portions of the molding space 190.

Also with the molding space 190 having such an arrangement as shown above, flows of the molding resin as shown by flow directions F10 of Fig. 31 can be fulfilled, so that effects similar to those of Working Examples 8 can be obtained. Also, since there never occurs any mark of the gate portions 194 on the surfaces of the molded articles formed within the individual product molding spaces 191, for example, transparent window portions 191a for visual recognition can be formed so as to occupy generally entireties of the molded articles formed by the individual product molding spaces 191.

### (Working Examples 10, 11)

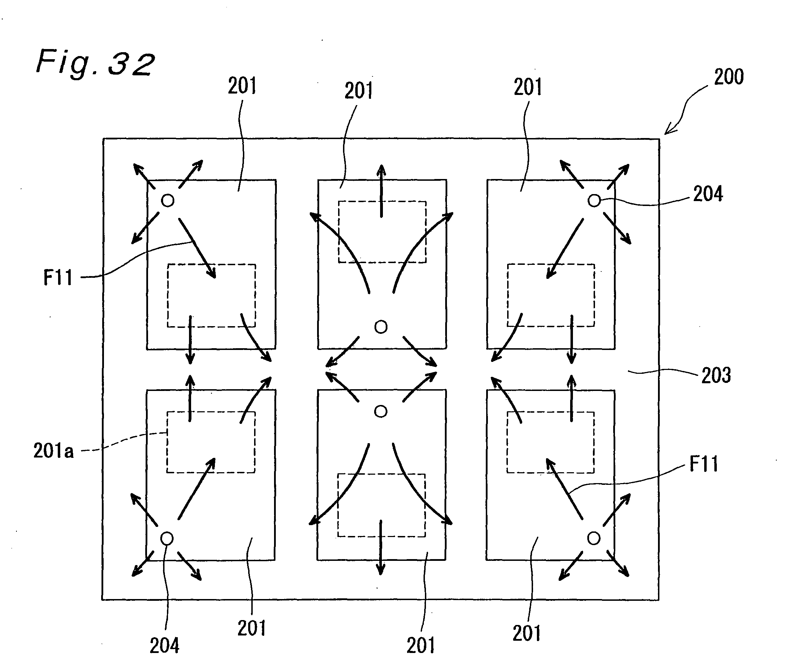

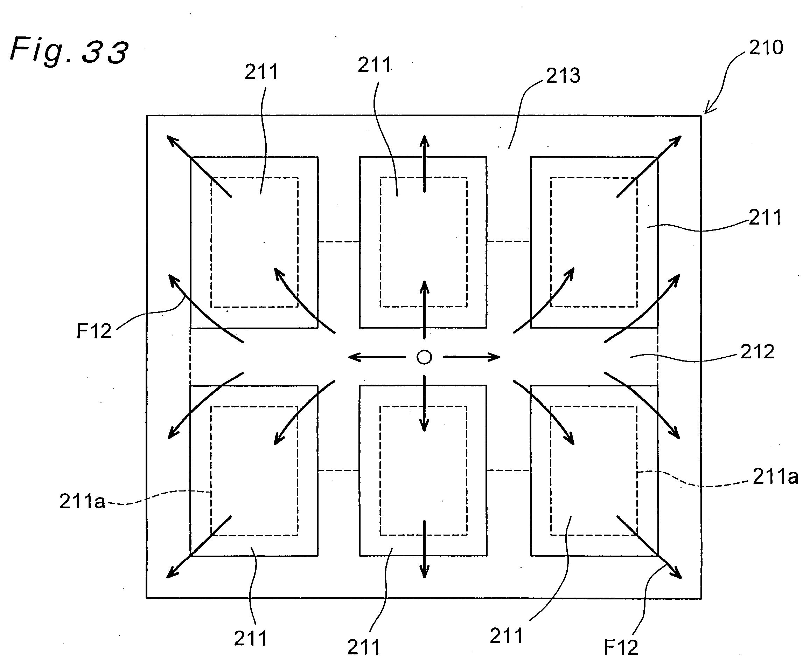

Furthermore, the arrangement construction of the molding space according to the individual embodiments described above are not limited to the numbers of product molding spaces, and may be applied to cases where even larger numbers of product molding spaces are provided. For example, a spatial arrangement view of a molding space 200 according to Working Example 10 is shown in Fig. 32, and a spatial arrangement view of a molding space 210 according to Working Example 11 is shown in Fig. 33.

As shown in Figs. 32 and 33, even in the cases where six product molding spaces 201, 211 are provided, there can be formed molding spaces having the effects of the foregoing working examples.

### (Working Example 12, 13)

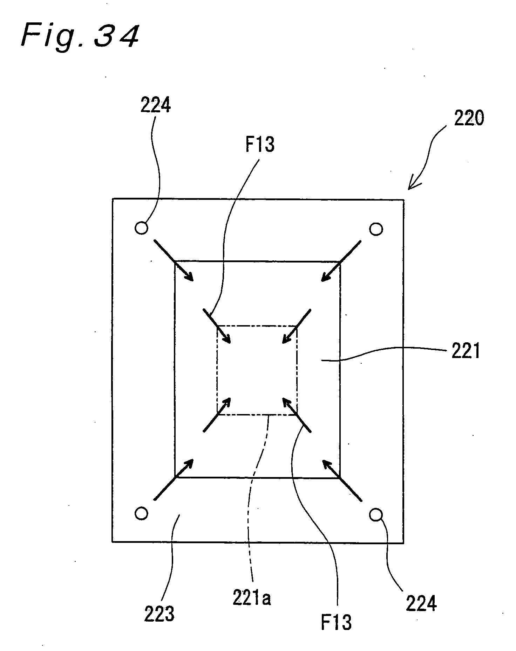

Furthermore, with such a molded article as shown above, it is also possible that its central portion is cut and removed to form the molded article. As such a case, a spatial arrangement view of a molding space 220 according to Working Example 12 is shown in Fig. 34. As shown in Fig. 34, the molding space 220 is formed of a product molding space 221, which is a generally square-shaped space, and a resin-injection-use molding space 223 which is placed adjacent to and communicative with the molding space 220 so as to surround its entire periphery. Further, four gate portions 224 are provided in the resin-injection-use molding space 223 so as to be placed at its corner portions.

In the molding space 220 of such an arrangement, molding resin injected through the four gate portions 224 is filled into the resin-injection-use molding space 223, and moreover the molding resin flows into the product molding space 221 in flow directions F13 from the resin-injection-use molding space 223 toward the center of the molding space 220, by which the molding resin is filled in the overall molding space 220.

With such flow directions F13 of the molding resin, collisions of the molding resin itself occur at places near the center of the product molding space 221, causing welds to occur. However, since a bored portion 221a is placed near the center of the molded article formed by the product molding space 221, welds, even if it has occurred, is removed, causing no problems.

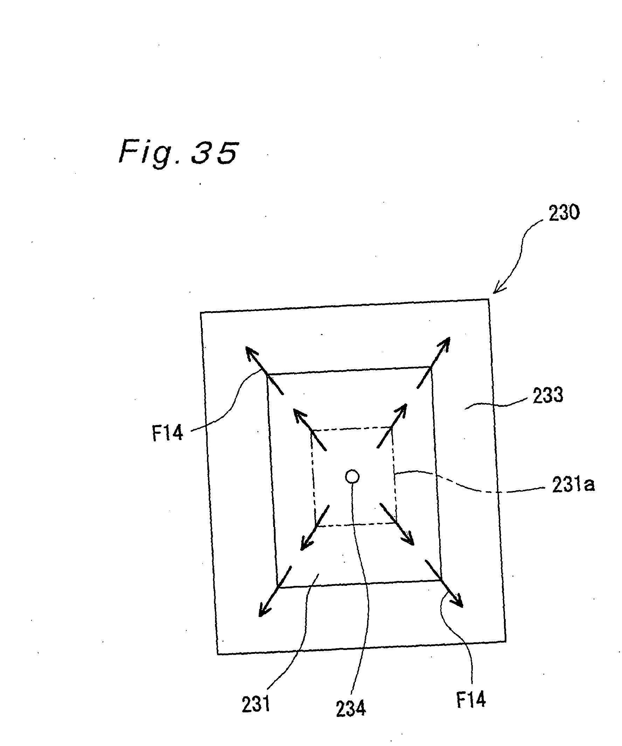

Also, it is also possible that as shown in a spatial arrangement view of a molding space 230 according to Working Example 13 of Fig. 35, a bored portion 231a is placed near a generally center of the molded article formed by a product molding spaces 231, and moreover a gate portion 234 is placed so as to correspond to the bored portion 231a. In such a case, any mark of the gate portion 234 can be removed by removal of the bored portion 231a while generally radial flow directions F14 from the gate portion 234 are fulfilled, advantageously.

### (Form of Molded Article)

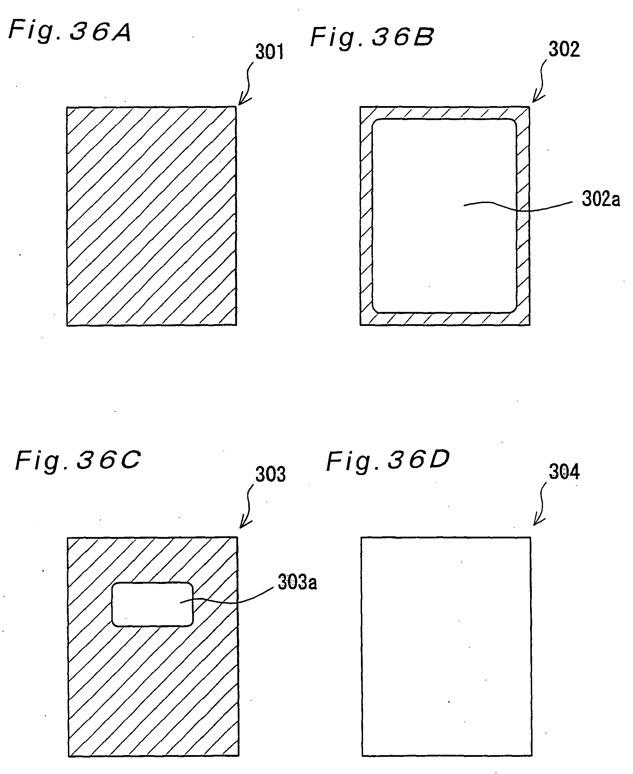

Next, various examples of the form of the injection-molded and in-mold decorated article formed by the manufacturing method of the individual embodiments described above or others are described with reference to schematic views of injection-molded and in-mold decorated articles shown in Figs. 36A, 36B, 36C and 36D. In the drawings of Figs. 36A to 36D, portions of the injection-molded and in-mold decorated article other than transparent window portions are hatched with a view to visually clearly distinguishing the transparent window portions and the other portions from each other.

First, an injection-molded and in-mold decorated article 301 shown in Fig. 36A is a molded article having no transparent window portions. This molded article is exemplified by molded articles for which marks of welds, resin burns or the like should not be left on their surfaces, such as automobile parts, household electrical appliances, construction materials and livingwares, as well as general molded articles.

Next, an injection-molded and in-mold decorated article 302 shown in Fig. 36B is a molded article in which a transparent window portion 302a is formed generally all over the molded article. Such a transparent portion 302a is characterized by being a portion which is used commonly for visual recognition and in which marks of welds or resin burns or the like should not be left on its surface and in its interior and moreover which is formed into a thin portion. This injection-molded and in-mold decorated article 302 is exemplified by information display window portions of personal digital assistants such as portable telephones, and display portions of personal computers, small-size televisions.

Next, an injection-molded and in-mold decorated article 303 shown in Fig. 36C is a molded article in which a transparent window portion 303a is formed as a little portion of the molded article. Such a transparent portion 303a is characterized by being a portion which is used commonly for visual recognition and in which marks of welds or resin burns or the like should not be left on its surface and in its interior and moreover which is formed into a thin portion. This injection-molded and in-mold decorated article 303 is exemplified by input panels of electrical appliances (e.g., rice cookers, washing machines).

Next, an injection-molded and in-mold decorated article 304 shown in Fig. 36D is a molded article which is formed entirely as a transparent window portion. Such an injection-molded and in-mold decorated article 304 is exemplified by optical products such as lenses.

### (Form of Partitioning Protrusions)

Next, various examples of the form of the partitioning protrusions 23 formed in the second mold element 2, 72 used in the foregoing individual embodiments are described. In the drawings used in the following description, the partitioning protrusions 23 are hatched with a view to visually clarifying the partitioning protrusions 23.

The second mold element 2 of the first embodiment shown in Fig. 7 has been described on a case where the partitioning protrusions 23 are placed so as to surround the entire peripheries of the product molding spaces 31, respectively. However, the placement of the partitioning protrusions 23 is not limited to such a case, but other various placements may be adopted.

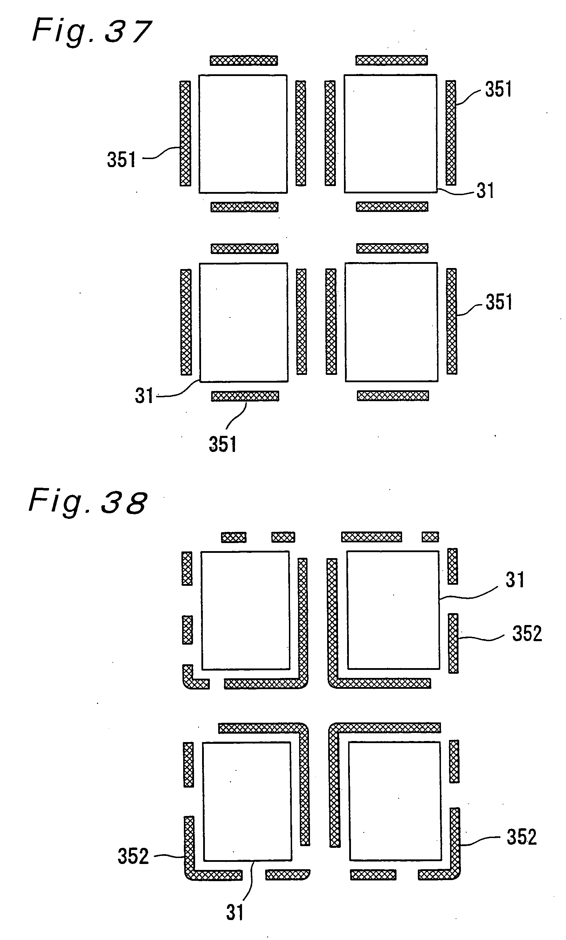

For example, as shown in Fig. 37, the case may be that partitioning protrusions 351 are placed so as to surround peripheries of the individual product molding spaces 31 but not placed only at corner portions of the product molding spaces 31.

Also, as shown in Fig. 38, the case may be that partitioning protrusions 352 are placed so as to generally surround peripheries of the individual product molding spaces 31 but formed in a combination of protruded portions of continuous formation and bump portions of discontinuous formation.

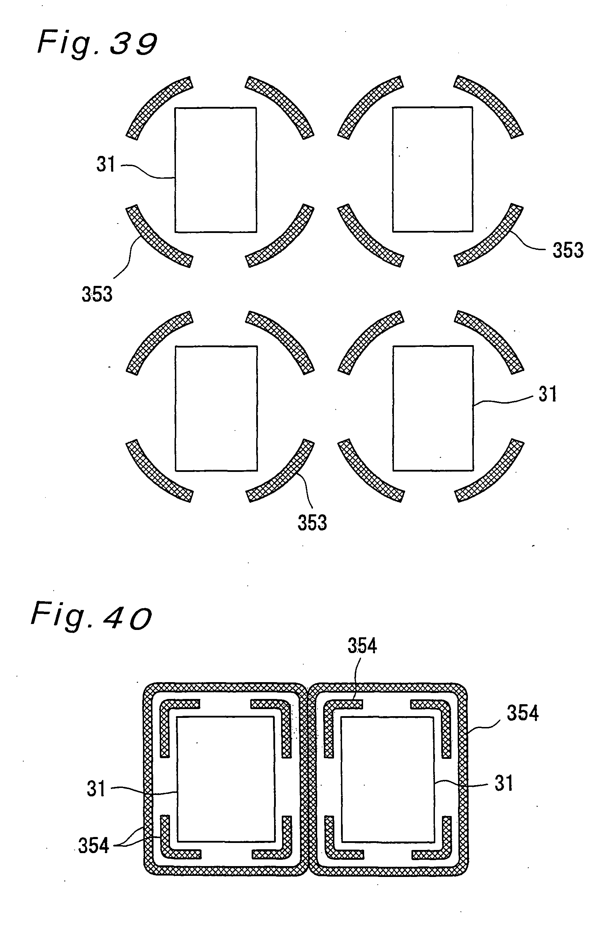

Also, shown in Fig. 39, the case may be that partitioning protrusions 353 are so formed that generally circular-shaped discontinuous bump portions surround peripheries of the individual product molding spaces 31.

Also, as shown in Fig. 40, the case may be that partitioning protrusions 354 are so formed that individual product molding spaces 31 are surrounded double and that individual bump portions of the double surrounding differ in arrangement pattern thereamong.

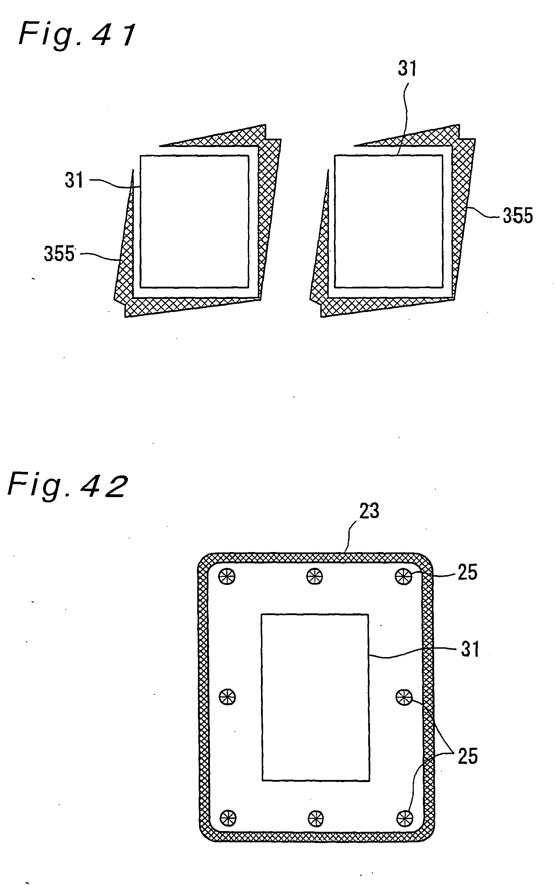

Also, as shown in Fig. 41, the case may be that partitioning protrusions 355 are formed so that their bump portions differ in width thereamong depending on site.

In particular, as the likelihood of loosenesses of the decorating film 5 may differ depending on the shape or site of molded articles, occurrence of loosenesses of the decorating film 5 can be prevented by changing the form of the partitioning protrusions according to the shape of the molded articles or the like. Further, with a high likelihood that wrinkles or loosenesses may occur, the likelihood can be suppressed by laying out the partitioning protrusions continuously in two arrays and moreover increasing the width of their bump portions. With an unlikelihood of occurrence of such wrinkles or loosenesses, it is allowable that the partitioning protrusions are formed in one array or not provided.

### (Arrangement Form of Suction Pins)

Next, variations of the arrangement form of the suction pins formed in the second mold element 2, 72 in the foregoing individual embodiments are described. In the drawings described later, the partitioning protrusions 23 and the suction pins 25 are hatched with a view to visually clarifying the partitioning protrusions 23 and the suction pins 25.

For example, as shown in Fig. 42, suction pins 25 may be placed at the four corners and near the centers of the side edges inside the partitioning protrusion 23.

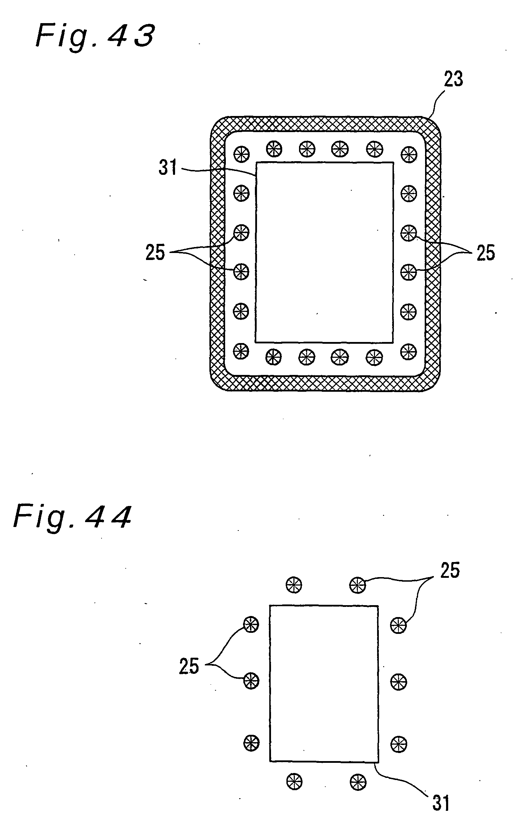

Also, as shown in Fig. 43, a large number of suction pins 25 may be placed so as to be generally uniformly laid out in a region defined by the product molding space 31 inside the partitioning protrusion 23.

Also, as shown in Fig. 44, in a case where the partitioning protrusions 23 are not present, individual suction pins 25 may be laid out uniformly in the vicinity of the outer periphery of the product molding space 31.

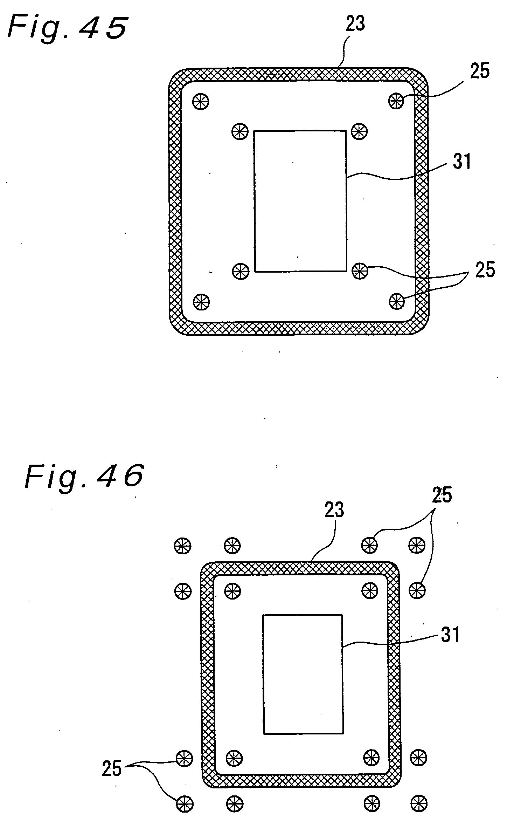

Also, as shown in Fig. 45, in a case where there is a large region between the inner periphery of the partitioning protrusion 23 and the outer periphery of the product molding space 31, suction pins 25 may be laid out in vicinities of the partitioning protrusion 23 and vicinities of the product molding space 31 so that a reliable holding of the decorating film 5 can be fulfilled.

Also, in such a case, as shown in Fig. 46, suction pins 25 may be provided on inner and outer sides of the four corner portions of the partitioning protrusion 23.

In particular, there are some cases where the subordination of the decorating film 5 to the second mold element 2 differs among sites, in which case there is a need for preventing occurrence of wrinkles or loosenesses in the product molding spaces 31. Since the subordination of the decorating film 5 to the metal mold becomes poor in vicinities of the partitioning protrusions 23 and increasingly with increasing closeness to corner portions, the suction pins 25 are desirably provided at such portions. Further, the suction pins 25 are preferably set in vicinities of the product molding spaces 31, which are objective portions where occurrence of wrinkles or the like should be prevented.

### (Placement Mode of Stretching Recess)

Next, various placement modes of the stretching recess 15 formed on the peripheries of the molds 1, 2, 71, 72 in the foregoing embodiments are described. In the drawings used in the following description, the stretching recess 15 is hatched with a view to visually clarifying the stretching recess 15.

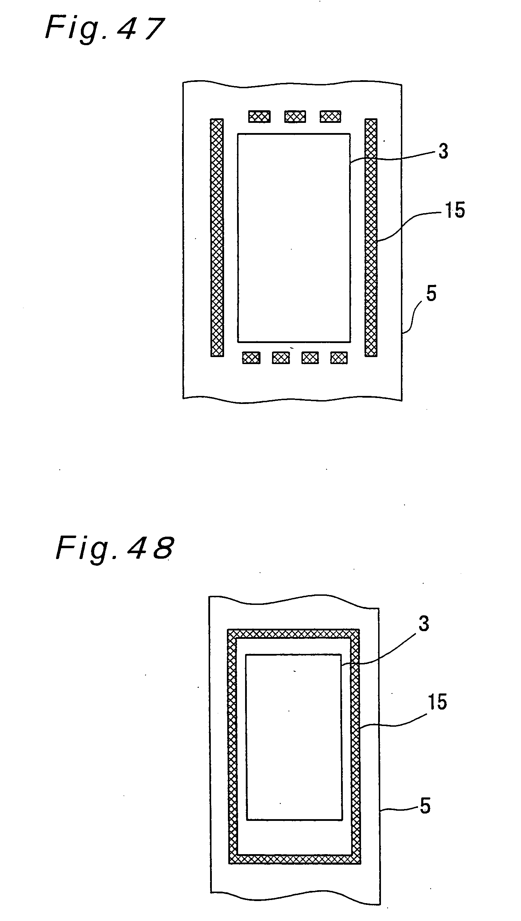

For example, instead of the case where the stretching recess 15 is formed on the entire periphery of the mold, the case may be that, as shown in Fig. 47, stretching recesses 15 placed along the up-down direction in the figure, which is the direction of feed of the decorating film 5, are formed continuously while stretching recesses 15 placed along the widthwise direction of the decorating film 5, which is the direction perpendicular to the feed direction, are formed discontinuously.

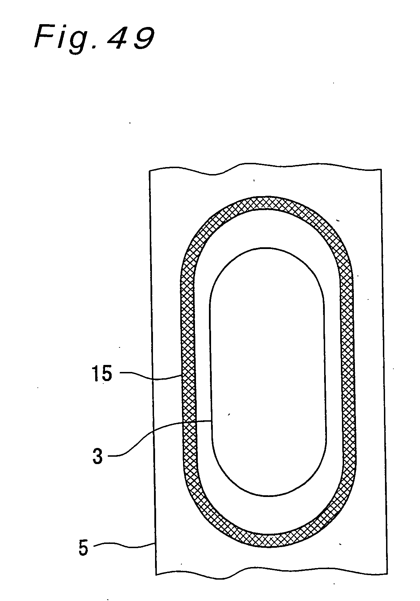

Also, as shown in Fig. 48, the stretching recesses 15 may be changed in width between feed direction and widthwise direction of the decorating film 5. For example, it is possible that the stretching recess 15 placed along the feed direction is formed with a width larger than the width for the stretching recess 15 placed along the widthwise direction while the stretching recess 15 formed close to the molding space 3 and placed along the widthwise direction is formed rather away from the molding space 3. Also, as shown in Fig. 49, the four corner portions of the stretching recess 15 shown in Fig. 48 may be deformed into a circular shape.

Loosening of the decorating film 5 differs between the feed direction, in which tensile force is applied to the decorating film 5, and the widthwise direction, and moreover depending on the configuration of the molded article and the thickness and configuration of the stretching recess 15 as well as its distance to the molding space 3. Therefore, by the adoption of such a placement mode of the stretching recess 15, it becomes possible to prevent occurrence of looseness as much as possible by selection of an optimum mode of the stretching recess 15 depending on various conditions of looseness. Furthermore, the placement mode of the stretching recess 15 is not limited to such cases as shown above, but the case may be that the stretching recess 15 is provided in two arrays only, or is not formed.

It is to be noted that, by properly combining the arbitrary embodiments of the aforementioned various embodiments, the effects possessed by them can be produced.

Although the present invention has been fully described in connection with the .preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A manufacturing method for an injection-molded and in-mold decorated article, the method including, setting a decorating film (5) between a first mold element (1, 71) and a second mold element (1, 72) placed in opposition to each other, injecting molten molding resin (4) into a molding space (3) defined by the decorating film and the first mold element, and solidifying the molding resin filled in the molding space, thereby manufacturing the injection-molded and in-mold decorated article (10), wherein
the molding space includes:
a product molding space (31), and
a resin-discharging-use molding space (33) which is formed so as to be adjacent to and communicative with at least part of a periphery of the product molding space and into which the molding resin is let to flow for discharge of the molding resin from the product molding space,
the method comprising:
injecting the molding resin into the product molding space;
discharging part of the injected molding resin from the product molding space into the resin-discharging-use molding space;
completing filling of the molding resin into the product molding space and the resin-discharging-use molding space; and
solidifying the molding resin while decorating a surface of the molding resin with the decorating film, so that the injection-molded and in-mold decorated article is manufactured.

2. The manufacturing method for the injection-molded and in-mold decorated article as defined in Claim 1, wherein
the molding space includes a resin-injection-use molding space (32) which is formed so as to be adjacent to and communicative with at least part of a periphery of the product molding space and into which the molding resin is injected from outside of the molding space,
the method further comprising:
injecting the molding resin from outside of the molding space into the resin-injection-use molding space; and
making the injected molding resin flow from the resin-injection-use molding space into the product molding space, by which injection of the molding resin into the product molding space is fulfilled.

3. The manufacturing method for the injection-molded and in-mold decorated article as defined in Claim 1, wherein
the molding space includes:
a first said product molding space and a second said product molding space, which are communicative with each other, and
a common said resin-discharging-use molding space (33) which is placed between the first product molding space and the second product molding space and which is communicative with the first product molding space and the second product molding space,
the method further comprising:
injecting the molding resin into the first product molding space and the second product molding space;
discharging, into the common resin-discharging-use molding space, part of the molding resin injected into the first product molding space and part of the molding resin injected into the second product molding space; and
completing filling of the molding resin into the first product molding space, the second product molding space and the common resin-discharging-use molding space.

4. The manufacturing method for the injection-molded and in-mold decorated article as defined in Claim 2, wherein
the molding space includes:
a first said product molding space and a second said product molding space, which are communicative with each other, and
a common said resin-injection-use molding space (32),
the method further comprising:
injecting the molding resin from outside of the molding space into the common resin-injection-use molding space;
making the injected molding resin flow from the resin-injection-use molding space into the first product molding space and the second product molding space, by which filling of the molding resin is fulfilled.

5. The manufacturing method for the injection-molded and in-mold decorated article as defined in Claim 1, wherein injection of the molding resin is performed in a state that, with the decorating film placed between the first mold element (1) and the second mold element (2), the first mold element and the second mold element are clamped to make the molding space hermetically closed.

6. The manufacturing method for the injection-molded and in-mold decorated article as defined in Claim 5, wherein, after the filling of the molding resin into the molding space, a capacity of the molding space is reduced while compressing the filled molding resin.

7. The manufacturing method for the injection-molded and in-mold decorated article as defined in Claim 1, wherein, with the decorating film is placed between the first mold element (71) and the second mold element (72) and making the first mold element and the second mold element approached by each other so as to be in a condition the molding space is opened, injection of the molding resin is performed, and thereafter the first mold element and the second mold element is clamped so that a capacity of the molding space is reduced while compressing the filled molding resin.

8. A mold for injection-molding with in-mold decoration for manufacturing an injection-molded and in-mold decorated article (10), by setting a decorating film (5) placed between a first mold element (1, 71) and a second mold element (1, 72) placed in opposition to each other, injecting molten molding resin (4) into a molding space (3) defined by the decorating film and the first mold element, and solidifying the molding resin filled in the molding space while decorating a surface of the molding resin with the decorating film, wherein
the molding space comprises:
a product molding space (31) into which the molten molding resin is injected; and
a resin-discharging-use molding space (33) which is formed so as to be adjacent to and communicative with at least part of a periphery of the product molding space and into which part of the molding resin injected into the product molding space is let to flow and discharged from the product molding space.

9. The mold for injection-molding with in-mold decoration as defined in Claim 8, wherein the molding space further comprises a resin-injection-use molding space (32) which is formed so as to be communicative with at least part of the product molding space and into which the molding resin is injected from outside of the molding space, and moreover which lets the injected molding resin flow into the product molding space so that injection of the molding resin into the product molding space is fulfilled.

10. The mold for injection-molding with in-mold decoration as defined in Claim 8, further comprising a film holding portion (23) which is formed as generally protruded portion on a surface of the second mold element, with which the decorating film in the resin-discharging-use molding space is to be brought into contact by the injection of the molding resin into the resin-discharging-use molding space, and which serves to hold placement of the decorating film while removing looseness of the decorating film by putting the decorating film into close contact with a surface of the protruded portion.

11. The mold for injection-molding with in-mold decoration as defined in Claim 10, further comprising a plurality of suction portions (25) which are set at the film holding portion or its vicinities in the surface of the second mold element and which serve for sucking and holding the decorating film in contact therewith.

12. The mold for injection-molding with in-mold decoration as defined in Claim 8, further comprising:
a recess portion (15) formed along an entirety or part of an outer periphery of the molding space in either one of the first mold element or the second mold element; and
a protruded engagement portion (16) which is formed on the other of the first mold element or the second mold element so as to correspond to the placement of the recessed portion and engage with the recess portion in the clamping state of the first mold element and the second mold element, wherein
in the clamping state of the first mold element and the second mold element with the decorating film interposed therebetween, tension is imparted to the decorating film by making the recessed portion and the engagement portion engaged with each other via the decorating film.

13. The mold for injection-molding with in-mold decoration as defined in Claim 8, further comprising an air vent portion (19) for discharging gas present in the resin-discharging-use molding space to outside of the molding space in a vicinity of a boundary with the product molding space in the resin-discharging-use molding space.

14. The mold for injection-molding with in-mold decoration as defined in Claim 8, wherein
the molding space comprises:
a first said product molding space;
a second said product molding space which is communicative with the first product molding space; and
a common said resin-discharging-use molding space (33) into which part of the molding resin injected into the first product molding space and part of the molding resin injected into the second product molding space are discharged and let to flow.

15. The mold for injection-molding with in-mold decoration as defined in Claim 9, wherein
the molding space comprises:
a first said product molding space;
a second said product molding space which is communicative with the first product molding space; and
a common said resin-injection-use molding space (32) into which the molding resin is injected from outside of the molding space and which lets the injected molding resin injected into the first product molding space and the second product molding space so that filling of the molding resin is fulfilled.
